(19) Europäisches Patentamt / European Patent Office / Office européen des brevets

(11) **EP 3 584 133 A1**

(12) **EUROPEAN PATENT APPLICATION**

(43) Date of publication:
25.12.2019  Bulletin 2019/52

(51) Int Cl.:
**B60T 17/00** (2006.01)   **B01D 53/26** (2006.01)
**F16T 1/48** (2006.01)

(21) Application number: **19181547.1**

(22) Date of filing: **20.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  20.06.2018  IT 201800006517
18.12.2018  IT 201800020122

(71) Applicant: **SCB Srl Societa' Unipersonale
12020 Villar San Costanzo (CN) (IT)**

(72) Inventor: **BERNARDI, Andrea
12100 CUNEO (IT)**

(74) Representative: **Bertolotto, Simone et al
Studio Torta S.p.A.
Via Viotti, 9
10121 Torino (IT)**

(54)  **INTELLIGENT CONDENSATE-DRAINING SYSTEM FOR A COMPRESSED AIR TREATMENT PLANT, DIAGNOSTIC METHOD AND COMPRESSED AIR TREATMENT PLANT**

(57)  A draining system (2) to drain condensate in a compressed air treatment plant (1) comprising an air treatment module (4; 6; 8; 10; 12; 14), the draining system (2) comprising: a drainage device (18a; 18b-18f) adapted to drain (34) condensate in the air treatment module; and a data analysis module (24; 28) operatively coupled to the drainage device (18a; 18b-18f) and configured to acquire operating data of the drainage device (18a; 18b-18f) and perform diagnosis of the functioning on the drainage device (18a; 18b-18f) on the basis of the acquired operating data.

FIG. 1

Printed by Jouve, 75001 PARIS (FR)

**Description**

CROSS-REFERENCE TO RELATED APPLICATIONS

This Patent application claims priority from Italian Patent Applications No. 102018000006517 filed on 20/06/2018 and No. 102018000020122 filed on 18/12/2018.

TECHNICAL FIELD

The present invention relates to a draining system for draining condensate in a compressed air treatment plant, an air treatment plant comprising the draining system and a diagnostic method.

BACKGROUND ART

Pneumatic plants are known for the production and treatment of compressed air. As is known, pneumatic plants need draining systems to drain the humidity that condenses in the plant.
In particular, to discharge the condensate and/or other liquids from the pipes of a pneumatic plant, the use is known of condensate drainage devices, opportunely coupled to different compressed air treatment modules comprised in the pneumatic plant.
For example, the use is known of condensate drainage devices with a maximum level sensor and comprising an accumulation chamber, in which the condensate that forms in the pipe to which the device is connected, collects under the effect of gravity. The level reached by the condensate is typically detected by a maximum level sensor, which triggers the automatic opening of a drain solenoid valve once the accumulation chamber is full.
Drainage devices are also known in which the maximum level sensor is of the capacitive type; in this case, in particular, the maximum level sensor detects a dielectric change between two armatures arranged in the accumulation chamber, due to the change in condensate level between the armatures, and sends an electrical control signal to a control unit, which controls the opening of the drain solenoid valve when this electrical signal reaches a predetermined threshold. To optimise the discharge step, it is known to also provide a minimum level sensor, always of the capacitive type, to control the closure of the drain solenoid valve as well. However, this solution entails relatively high costs and relatively complex control systems.
Drainage devices having lower costs and complexity with respect to level-sensor drainage devices are also known. In particular, timer-controlled drainage devices are known in which the open and closed times of the solenoid valve are predetermined and settable by an operator. In other words, timer-controlled drainage devices are configured to open and close the drain solenoid valve at regular intervals.
One drawback of timer-controlled drainage devices consists in that the drain solenoid valve can also be open in time periods when there is no condensate to drain, resulting in a waste of compressed air and/or electric power, as power consumption of the drainage device when the solenoid valve is closed is at least an order of magnitude lower with respect to power consumption when the solenoid valve is open.
To overcome this last drawback, timer-controlled drainage devices with a condensate sensor have been introduced, in which there are standby periods of predetermined duration during which the drain solenoid valve is closed, alternated by active periods, of predetermined duration, in which the drain solenoid valve is open on condition that the condensate sensor detects the presence of condensate. In this way, the consumption of compressed air and/or electric power is reduced with respect to timer-controlled drainage devices without a condensate sensor, without reaching the costs of drainage devices with a maximum level sensor. In any case, beyond the presence or absence of the condensate sensor, the duration of the standby intervals is predetermined in timer-controlled drainage devices.
One drawback common the all the aforementioned drainage devices of known type consists in that, in any case, the condensate drainage devices in a pneumatic plant operate in a scheduled manner and are not able to recognise faults or systemic changes in parameters related to the operation of the drainage devices, the pneumatic plant in which they operate and/or the air treatment modules that are part of the pneumatic plant and to which the drainage devices are operatively coupled.
Furthermore, all the aforementioned drainage devices of known type do not integrate self-diagnostics or cross-diagnostics and therefore are unable the provide information on their state of operation or on the state of operation of the system, or the plant, of which they are part.

DISCLOSURE OF INVENTION

The object of the present invention is to provide a draining system, a diagnostic method and an air treatment plant, adapted to overcome the drawbacks of the known art.

According to the present invention, a draining system, a diagnostic method and an air treatment plant are provided, as defined in the appended claims.

BRIEF DESCRIPTION OF THE DRAWINGS

For a better understanding of the present invention, some preferred embodiments will now be described, purely by way of non-limitative example and with reference to the accompanying drawings, in which:

- Figure 1 schematically shows a pneumatic plant comprising a draining system according to one embodiment of the present invention;
- Figures 2A-2D show the time trend of respective control signals of a portion of the draining system in Figure 1 during a discharge cycle;
- Figure 3 schematically shows, by means of a flowchart, a drainage method implemented by the draining system in Figure 1;
- Figure 4 schematically shows, by means of a flowchart, a control method implemented by the draining system in Figure 1; and
- Figure 5 schematically shows, by means of a flowchart, a data analysis and processing method implemented by the draining system in Figure 1.

BEST MODE FOR CARRYING OUT THE INVENTION

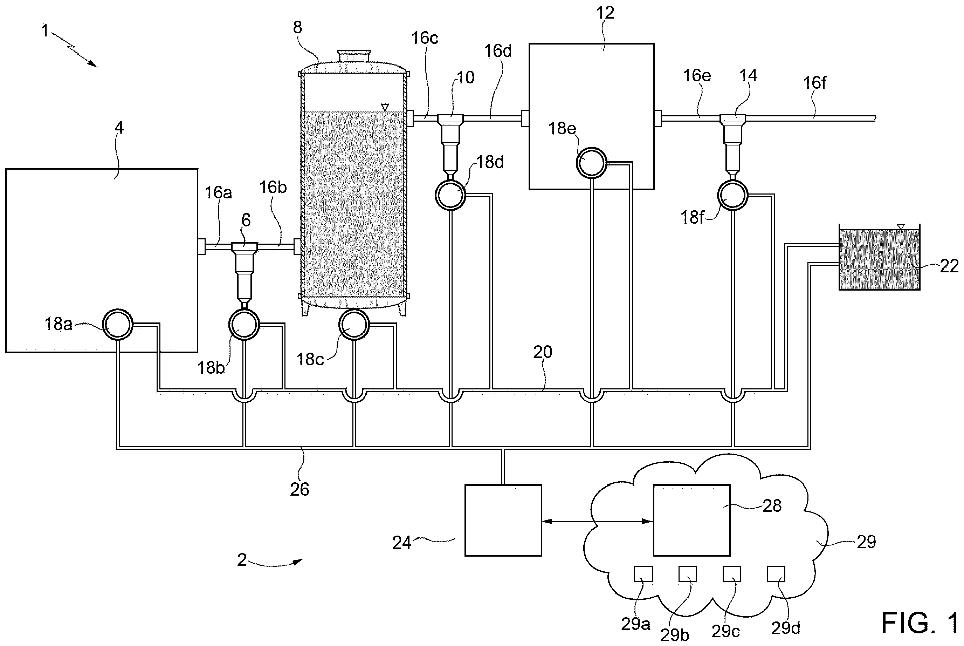

Figure 1 schematically shows an air treatment plant 1, in particular a compressed air treatment plant, such as a pneumatic plant. The pneumatic plant 1 comprises a draining system 2 according to one embodiment of the present invention. In particular, the pneumatic plant 1 is a plant for the production and treatment of compressed air.

In particular, in a manner which is in itself known, the pneumatic plant 1 comprises a compressor 4, an aftercooler 6, a tank 8, a prefilter 10, a dryer 12 and a filter 14. Respective pneumatic pipes 16a-16f fluidically couple the compressor 4 to the aftercooler 6, the aftercooler 6 to the tank 8, the tank 8 to the prefilter 10, the prefilter 10 to the dryer 12, the dryer 12 to the filter 14, and the filter 14 to an outlet of the pneumatic plant 1 adapted to provide opportunely treated and ready to use compressed air in output.

The treatment of compressed air envisages the use of a series of units that, opportunely installed, ensure the output of high-quality air (air as dry as possible). To this end, the filter 14 (for example, a coalescing filter) inserted at the end of the pipe has the function of collecting any drops of water still present in the airflow.

In other embodiments, the pneumatic plant 1 could comprise a single filter stage upstream or downstream of the dryer 12, and so either the prefilter 10 or the filter 14 might be absent. Furthermore, in other embodiments, the aftercooler 6 might be integrated in the compressor 4.

In detail, the compressor 4 produces and feeds compressed air into pneumatic pipe 16a. In particular, the compressor 4 sucks air with characteristics dependent on the climatic conditions of the place where the pneumatic plant 1 is installed (such as, for example, the atmospheric pressure, atmospheric temperature and relative atmospheric humidity), and compresses it until it reaches the desired pressure. As is known in physics, and in particular by applying the perfect gas law, with opportune approximations, to the air sucked in by the compressor 4, an increase in the pressure at constant volume entails an increase in the temperature in a directly proportional manner. In consequence, the compressed air leaving the compressor 4 has a higher temperature than the atmospheric temperature, for example 30 °C, depending on the type of compressor used.

Furthermore, the air sucked in by the compressor 4 contains an amount of water vapour dependent on the atmospheric humidity of the place where the plant is installed. It is preferable that the amount of water vapour is reduced as much as possible before the compressed air reaches the outlet of the pneumatic plant 1, as it is preferable to supply dry compressed air without any contaminating agents in output from the pneumatic plant 1.

Relative humidity is defined as the ratio between the amount of water vapour contained in a volume of air, also defined as absolute humidity, and the maximum amount of water vapour that can be contained in said volume of air at the same pressure level, also defined as saturation humidity.

As is known, an increase in temperature entails an increase in saturation humidity and, in consequence, a drop in relative humidity. In other words, the increase in air temperature, due to the compression operation performed by the compressor 4, entails an increase in the capacity of the air to absorb water.

However, the amount of water contained in the air sucked in by the compressor 4 is usually such that the saturation humidity is reached inside the compressor 4 anyway, resulting in condensation of the water vapour in excess.

The condensate thus produced is collected and drained, as described below, by a first drainage device 18a, operatively coupled to the compressor 4.

The compressed air from the compressor 4 is then fed into pneumatic pipe 16a and received by the aftercooler 6, which reduces the temperature to a value dependent on the specifications of the aftercooler, for example 20 °C. The drop in temperature of the compressed air inside the aftercooler 6 entails an increase in relative humidity. In particular, the temperature is lowered below the dew point of the compressed air, so as to condense at least part of the water vapour originally sucked in by the compressor 4 and not drained by the first drainage device 18a. The condensate thus produced is collected and drained by a second drainage device 18b, operatively coupled to the aftercooler 6, as described below.

The compressed air treated by the aftercooler 6 is then fed into pneumatic pipe 16b and received by the tank 8. Once it reaches the tank 8, the compressed air might still contain water vapour, for example in the case where the aftercooler 6 has not lowered the temperature of the compressed air to a value sufficient for entirely condensing the water vapour and/or for sub-optimal calibration of the second drainage device 18b, or for yet other reasons, including, for example, faults/failure of the aftercooler 6 and/or the second drainage device 18b. A third drainage device 18c is operatively coupled to the tank 8 and is configured to collect and drain the condensate generate by any residual water vapour that might be present in the compressed air passing through the tank 8.

Then the compressed air leaves the tank 8 and, passing through pneumatic pipe 16c, reaches the prefilter 10. The prefilter 10 is configured to block the passage of oil, water and/or particulate to the successive stages of the pneumatic plant 1. For example, the prefilter 10 is a coalescing filter. A fourth drainage device 18d is operatively coupled to the prefilter 10 and is configured to collect and drain the condensate generated by any residual water vapour that might be present in the compressed air passing through the prefilter 10.

Then the compressed air leaves the prefilter 10 and, passing through pneumatic pipe 16d, reaches the dryer 12. The dryer 12 is configured to further reduce the temperature of the compressed air, and in consequence the water vapour that might be contained therein. For example, the temperature of the compressed air inside the dryer 12 is lowered to a value corresponding to the type of dryer chosen, for example 4 °C. The dryer 12 is, for example, a chemical dryer or a diaphragm or absorption dryer. A fifth drainage device 18e is operatively coupled to the dryer 12 and is configured to collect and drain the condensate generated by any residual water vapour that might be present in the compressed air passing through the dryer 12.

Then the compressed air leaves the dryer 12 and, passing through pneumatic pipe 16e, reaches the filter 14. Similarly to the prefilter 10, the filter 14 is configured to further block the passage of oil, water and/or particulate to the outlet of the pneumatic plant 1. A sixth drainage device 18f is operatively coupled to the filter 14 and is configured to collect and drain the condensate generated by any residual water vapour that might be present in the compressed air passing through the filter 14.

Each of the first, second, third, fourth, fifth and sixth drainage devices 18a-18f is, for example, a timer-controlled drainage device equipped with a condensate sensor. As described in detail below, each drainage device 18a-18f comprises a control unit that checks at regular intervals whether condensate has accumulated for draining, and if so, open a respective drain solenoid valve. In other embodiments, the drainage devices could be of a different type; for example, it could be a timer-controlled drainage device without a condensate sensor or level-sensor drainage devices.

A hydraulic pipeline 20 is configured to convey the condensate drained by the drainage devices 18a-18f to a water/oil separator 22. In particular, the water/oil separator 22 is configured to remove oil, if present, from the condensate drained by the drainage devices 18a-18f, in order to enable the drainage of purified condensate that respects the environmental regulations that might be in force in the place where the pneumatic plant 1 is installed. For example, the oil could be a lubricant of the compressor 4. The water/oil separator 22 can be also configured to remove further contaminating substances present in the condensate, such as, for example, hydrocarbons, dust and particulate, rust, abraded particles or sealant remains. The water/oil separator 22 is, for example, a gravity separator.

According to one aspect of the present invention, in addition to the drainage devices 18a-18f, the draining system 2 comprises a controller 24, a bus 26 and a data analysis module 28. In particular, the bus 26 is configured to enable bidirectional communication between the drainage devices 18a-18f and the controller 24. For example, the bus 26 is a token bus. Optionality, the bus 26 also enables bidirectional communication between the water/oil separator 22 and the controller 24. The bus 26 also enables distributing electric power for powering the drainage devices 18a-18f. Furthermore, the controller 24 is also in bidirectional communication with the data analysis module 28, for example via a wireless communications channel. In one embodiment, the data analysis module is a remote module, more specifically part of a cloud infrastructure 29. For example, the cloud infrastructure 29 can comprise a database 29a, diagnostic systems 29b, alarm and event management systems 29c and control panels 29d for operators or managers of the pneumatic plant 1.

In one embodiment, the drainage devices 18a-18f (or at least one of them) are intelligent devices, i.e. provided with computational logic and an onboard memory, and are configured to perform computational operations aimed at providing diagnostics on the operation of the drainage device 18a-18f, as better shown below. The result of these operations for operational diagnostics, or an intermediate result, is optionally stored in the onboard memory, and then sent in real time, or at a deferred time, to the controller 24. The controller 24 receives the respective operational diagnostic signals from the drainage devices 18a-18f and sends said diagnostic signals to the data analysis module 28. Alternatively, the controller 24 receives the operational diagnostic signals from each drainage device 18a-18f at a later time, for example with a predetermined frequency, and sends said diagnostic signals to the data analysis module 28.

In a different embodiment, the drainage devices 18a-18f (or at least one of them) are provided with computational logic and an onboard memory of simplified type, i.e. adapted to store (at least temporarily) operating data of the air treatment module to which the they are connected and/or of the condensate drains, and to send this data to the controller 24. The computational operations aimed at providing operational diagnostics of the associated drainage device 18a-18f are performed remotely by the controller 24 and/or by the data analysis module 28. In particular, the diagnostic signals comprise data indicative of the drain time of the respective drainage device 18a-18f.

Hereinafter, unless specified otherwise, reference will be made to an operating condition in which the processing and handling of the diagnostic signals is carried out remotely by the data analysis module 28.

The data analysis module 28 analyses said diagnostic signals, in order to process and send to the controller 24 new control parameters for each drainage device 18a-18f, intended to optimize their operation. In particular, said control parameters comprise a standby time between consecutive discharge periods.

In one non-limitative embodiment, the aforementioned diagnostic signals are jointly analysed with the climatic information on the geographic position where the pneumatic plant 1 is installed.

According to one aspect of the present invention, an identification code is associated with each drainage device 18a-18f and is stored in a local memory of each drainage device 18a-18f. The same identification code is stored by the controller 24 and/or by the data analysis module 28, such that the controller 24 and/or the data analysis module 28 are able to identify and distinguish each drainage device 18a-18f and the related diagnostic data from the other drainage devices 18a-18f and their respective diagnostic data.

The drainage devices 18a-18f can also store, in the local memory, the name of the drainage device, for example corresponding to the model name/number of the drainage device 18a-18f, e.g. as listed in the sales catalogue, and/or the firmware version, i.e. the version of the firmware mounted on board the associated drainage device 18a-18f.

Furthermore, after the first installation of the drainage devices 18a-18f in the pneumatic plant 1, the data analysis module 28 receives information on the positioning of each drainage device 18a-18f and, in particular, on its serial order in the pneumatic plant 1 and on the respective compressed air treatment module to which it is operatively coupled. For example, in the case of Figure 1, the data analysis module 28 stores or receives from the database 29a of the cloud infrastructure 29 data indicative of the fact that the first drainage device 18a is operatively coupled to the compressor 4, the second drainage device 18b is operatively coupled to the aftercooler 6 arranged downstream of the first drainage device 18a, the third drainage device 18c is operatively coupled to the tank 8 arranged downstream of the second drainage device 18c, and so on.

Each respective drainage device 18a-18f can also store one or more of the following data items in its local memory:

- maximum compressor capacity, i.e. the maximum air flow rate of the compressor 4 supportable (i.e. which does not cause malfunctioning) by the drainage device installed on the compressor 4 - this information is therefore stored by drainage device 18a, shown in Figure 1;
- maximum dryer capacity, i.e. the maximum air flow rate of the dryer 12 supportable (i.e. which does not cause malfunctioning) by the drainage device installed on the dryer 12 - this information is therefore stored by drainage device 18e, shown in Figure 1;
- maximum tank capacity, i.e. the maximum air flow rate of the tank 8 supportable (i.e. which does not cause malfunctioning) by the drainage device installed on the tank 8 - this information is therefore stored by drainage device 18c, shown in Figure 1;
- maximum filter/prefilter capacity, i.e. the maximum air flow rate of the filter 14 or prefilter 10 supportable (i.e. which does not cause malfunctioning) by the drainage device installed on the filter 14 or prefilter 10 - this information is therefore stored by drainage device 18d (associated with the prefilter 10) or drainage device 18f (associated with the filter 14), shown Figure 1;
- nominal flow rate, i.e. the maximum amount of water that the drainage device can drain in a given unit of time (e.g. from a few milliseconds to a several seconds, for example 3 seconds).

In consequence, as better described hereinafter, it is possible to perform accurate diagnostics on the operation of the pneumatic plant 1 and, in particular, on the drainage devices 18a-18f and the compressed air treatment modules to which they are operatively coupled, without increasing the complexity of the drainage devices 18a-18f.

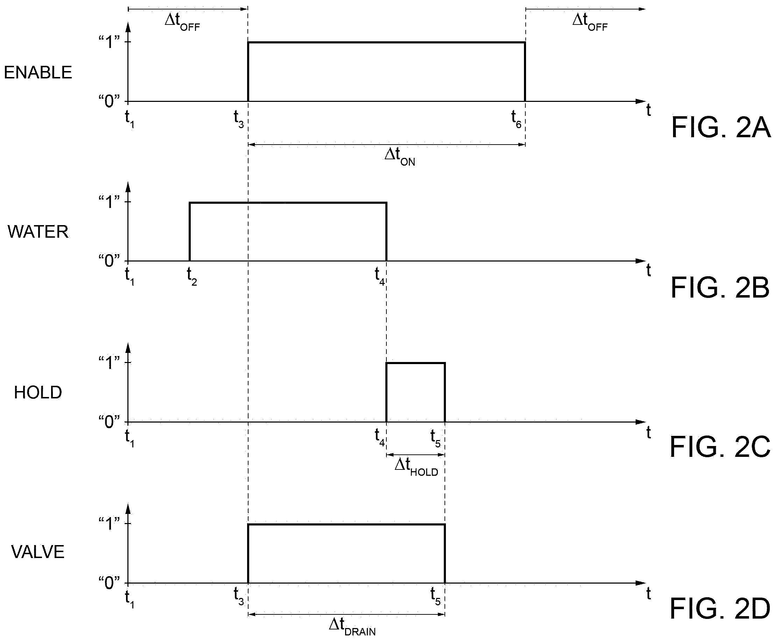

Optionally, the functionality of the data analysis module 28 can be implemented by the controller 24, so as to enable correct operation of the draining system 2 even in the event of communication problems between the controller 24 and the data analysis module 28, or in the event of malfunctioning of the data analysis module 28. By way of non-limitative example of the present invention, Figures 2A-2D show the possible time trends of respective control signals of whichever drainage device of the drainage devices 18a-18f of the intelligent draining system of the plant 1 in Figure 1, during a discharge cycle of said drainage device, and use a common time scale. In particular, for simplicity of description, hereinafter reference will be made to the first drainage device 18a. It is obvious that the same considerations hold for the other drainage devices 18b-18f.

In particular, an activation signal ENABLE, the time trend of which is shown in Figure 2A, controls an active state of the drainage device 18a. In particular, when the activation signal ENABLE has logic value "0", the drainage device is in a low power consumption standby state, while when the activation signal ENABLE has logic value "1", the drainage device is in an active state, configured to drain condensate, if present. As mentioned, in this embodiment the drainage device 18a is a timer-controlled drainage device with a condensate sensor; the activation signal ENABLE is generated locally by the timer of the drainage device 18a. Therefore, in particular, the activation signal ENABLE alternately has logic value "0" for a standby time interval $\Delta t_{OFF}$ and logic value "1" for an active time interval $\Delta t_{ON}$ ($\Delta t_{OFF}$ is therefore the interval running between one active time interval $\Delta t_{ON}$ and the temporally successive active time interval $\Delta t_{ON}$).

Furthermore, a condensate present signal WATER, the time trend of which is shown in Figure 2B, assumes a different value according to the presence or absence of condensate inside the drainage device 18a. In particular, the condensate present signal WATER has logic value "1" if the condensate sensor of the drainage device 18a detects condensate inside the drainage device 18a, otherwise it has logic value "0". For example, the condensate present signal WATER is an output signal of the condensate sensor.

Furthermore, a holding signal HOLD, the time trend of which is shown in Figure 2C, contributes to controlling the opening state of the drain solenoid valve of the drainage device 18a. In particular, the holding signal HOLD transitions from logic value "0" to logic value "1" whenever the condensate present signal WATER transitions from logic value "1" to logic value "0", i.e. every time that detection of condensate by the drainage device 18a ceases. After said transition, the holding signal HOLD remains stable at logic value "1" for a holding time interval $\Delta t_{HOLD}$, at the end of which it returns to logic value "0". The drain solenoid valve can only be closed on a transition of the holding signal HOLD from logic value "1" to logic value "0". In consequence, the holding signal HOLD has the function of delaying closure of the solenoid valve by a time $\Delta t_{HOLD}$, so as to avoid it being closed immediately after the detection of condensate stops, and therefore prevents inefficiencies in the event of false acknowledgments of discharge completion.

Furthermore, a solenoid valve command signal VALVE, the time trend of which is shown in Figure 2D, controls the solenoid valve such that it is open if the command signal VALVE has logic value "1" and is closed if the command signal VALVE has logic value "0".

The holding signal HOLD and the command signal VALVE are generated by the control unit of the drainage device 18a based on the ENABLE and WATER signals received in input.

According to one aspect of the present invention, the duration of the time interval in which the command signal VALVE has logic value "1" during a discharge cycle corresponds to the drain time $\Delta t_{DRAIN}$, which is comprised, as mentioned, in the diagnostic signals sent from the drainage device 18a to the controller 24.

Referring jointly to Figures 2A-2D and by way of non-limitative example, a possible discharge cycle is described below for any one of the drainage devices 18a-18f of the intelligent draining system; for example, without loss of generality, hereinafter reference will be made to drainage device 18a.

In a first time instant $t_1$, the activation signal ENABLE has logic value "0", the condensate present signal WATER has logic value "0", the holding signal HOLD has logic value "0" and the solenoid valve command signal VALVE has logic value "0". In this initial configuration, the solenoid valve is closed and there is no condensate accumulated in the drainage device 18a; in any case, the drainage device 18a is in a standby state, as the first time instant $t_1$ is included in a standby time interval $\Delta t_{OFF}$ in which, as mentioned, the drain solenoid valve is closed independently of the presence or absence of condensate.

In a second time instant $t_2$, following the first time instant $t_1$, the condensate present signal WATER changes logic state, passing from logic value "0" to logic value "1". In other words, at time instant $t_2$, the condensate sensor of the drainage device 18a starts to detect condensate to drain. However, at time instant $t_2$, the drainage device 18a is still in the standby state (ENABLE = "0"), and so the drain solenoid valve remains closed (VALVE = "0").

In a third time instant $t_3$, following the second time instant $t_2$, the activation signal ENABLE changes logic state, passing from logic value "0" to logic value "1". In other words, at time instant $t_3$, the standby time interval $\Delta t_{OFF}$ terminates and an active time interval $\Delta t_{ON}$ of the drainage device 18a starts. In consequence, at time instant $t_3$, the drainage device 18a becomes enabled (ENABLE = "1") to check if there is condensate to drain and, if so, open the drain solenoid valve; in this example, at time instant $t_3$, there is condensate to drain (WATER = "1") and, in consequence, the drain solenoid valve is opened (VALVE = "1") and draining of the condensate commences.

In a fourth time instant $t_4$, following the third time instant $t_3$, the condensate present signal WATER changes logic state, passing from logic value "1" to logic value "0". In other words, at time instant $t_4$, the condensate sensor stops detecting condensate as there is no condensate left to detect. In consequence, at time instant $t_4$, the holding signal HOLD passes from logic value "0" to logic value "1".

In a fifth time instant $t_5$, following the fourth time instant $t_4$ and such that $t_5 - t_4 = \Delta t_{HOLD}$, the command signal VALVE changes logic state, passing from logic value "1" to logic value "0". In other words, at time instant $t_5$, the holding

time interval $\Delta t_{HOLD}$ has passed following the end of detecting the presence of condensate, and so it is possible to close the drain solenoid valve. In consequence, the drain solenoid valve has been open for a drain time $\Delta t_{DRAIN} = t_5 - t_3$.

At the fifth time instant $t_5$, the drainage device 18a is still in an active state (ENABLE = "1") .

In one embodiment, shown in Figure 2A, following the fifth time instant $t_5$, the drainage device 18a remains in the active state (ENABLE = "1") and the control unit continues to a monitor the presence of condensate based on the value of the condensate present signal WATER. In this example, the condensate sensor does not detect further condensate to drain up to the end of the current active time interval $\Delta t_{ON}$, i.e. up to a sixth time instant $t_6$, following the fifth time instant $t_5$ (and such that $t_6 - t_3 = \Delta t_{ON}$), when the activation signal ENABLE passes from logic value "1" to logic value "0". At the sixth time instant $t_6$, as the discharge cycle has finished, the drainage device 18a can send diagnostic signals to the controller 24, including the drain time $\Delta t_{DRAIN}$. Optionally, the holding time interval $\Delta t_{HOLD}$ is subtracted from the drain time $\Delta t_{DRAIN}$ sent to the controller 24. Therefore, at sixth time instant $t_6$, the drainage device 18a returns to a standby state.

In a different embodiment, not shown in the figures, after the fifth time instant $t_5$ and in the absence of water to discharge (the control unit read a value of the condensate present signal WATER = "0"), the drainage device 18a is forced into the standby state (ENABLE = "0") . In this case, at the fifth time instant $t_5$ (or at a time instant following $t_5$, considering a possible computational delay), as a discharge cycle has finished, the drainage device 18a can send diagnostic signals to the controller 24, including the drain time $\Delta t_{DRAIN}$. Optionally, the holding time interval $\Delta t_{HOLD}$ is subtracted from the drain time $\Delta t_{DRAIN}$ sent to the controller 24.

Each respective drainage device 18a-18f can also store one or more of the following data items in its local memory:

- predetermined standby time interval $\Delta t_{OFF\_PD}$, usable for timer-controlled drainage devices, which is set in the manufacturing phase and serves to define a standby time interval between one active cycle and the next (i.e. between mutually successive $\Delta t_{ON}$ intervals) ; the value of $\Delta t_{OFF\_PD}$ can be updated during use of the respective drainage device 18a-18f;
- predetermined active time interval $\Delta t_{ON\_PD}$, usable for level-controlled condensate drains, which is set in the manufacturing phase and provides a reference for the active time interval first used by the respective drainage device;
- number of automatic discharge cycles, i.e. the value that indicates the number of automatic cycles carried out by the drainage device in question (this value is set to 0 in the manufacturing phase).

One or more of the drainage devices 18a-18f can also perform a condensate discharge. In this case, this is a forced discharge cycle that is, for example, useful in the event of a verified malfunction on the respective drainage device 18a-18f. The local memory of each drainage device 18a-18f can thus also store information regarding the number of forced discharge cycles (value pre-set to 0 in the manufacturing phase).

One or more of the drainage devices 18a-18f can also perform a condensate discharge as a function of a manual command by an operator. In this case, this is a discharge cycle that is requested by the operator (e.g. remotely or on the spot) independently of the value of the WATER signal in Figure 2B, and is, for example, useful in the event of verified malfunction of the respective drainage device 18a-18f, verified during a check or maintenance operation. The local memory of each drainage device 18a-18f can thus also store information regarding the number of manual discharge cycles (value pre-set to 0 in the manufacturing phase).

Furthermore, each drainage device 18a-18f can also perform one or more routine discharges, for example to carry out cleaning operations, even in the absence of condensation to discharge. The local memory of each drainage device 18a-18f can thus also store information regarding the number of routine discharge cycles (value pre-set to 0 in the manufacturing phase).

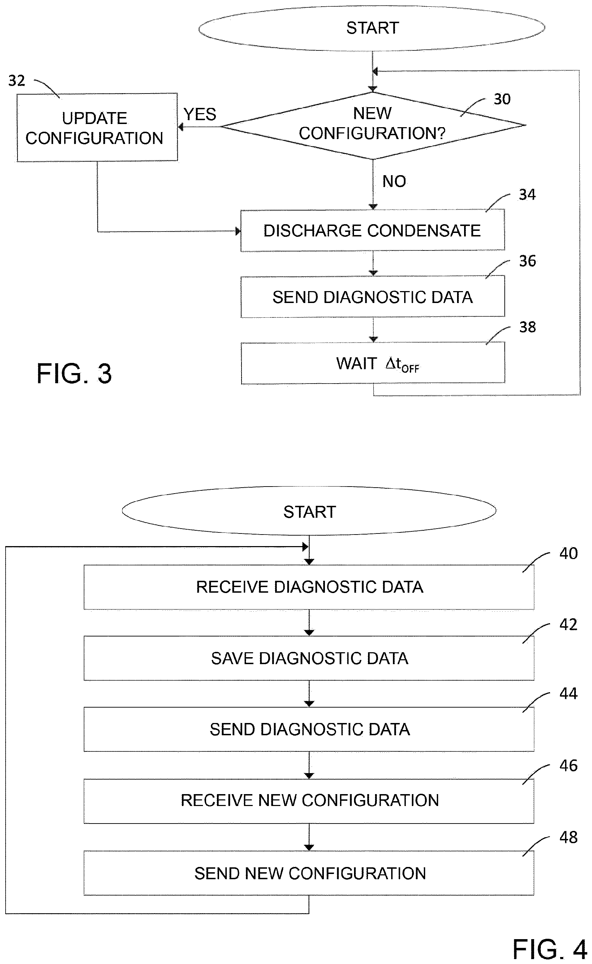

Figure 3 schematically shows, by means of a flowchart, a condensate drainage method implemented by each drainage device 18a-18f. In particular, for simplicity of description, hereinafter reference will be made to the first drainage device 18a, by way of example. It is obvious that the same considerations hold for each of the other drainage devices 18b-18f.

It should be noted that configuration operations are not necessary on the first use of the drainage devices 18a-18f, as the drainage devices 18a-18f are preconfigured, with operating parameters predetermined in the manufacturing phase. In fact, each drainage device 18a-18f contains in its local memory all of the information that allows it to be installed on any unit of any plant.

First of all, the drainage method in Figure 3 starts with the step 30 of checking whether a new configuration for the drainage device 18a has been received. In particular, during step 30, the control unit of the drainage device 18a checks whether a new configuration has been received from the controller 24 (to this end, step 48 in Figure 4 should be considered). In particular, the new configuration comprises a duration for the standby time interval $\Delta t_{OFF}$ different from that with which the timer of the drainage device 18a is currently configured. In particular, during a first discharge cycle of the drainage device 18a, the duration of the standby time interval $\Delta t_{OFF}$ has a predetermined value ($\Delta t_{OFF\_PD}$),

for example set by an installer of the pneumatic plant 1, for example based on the characteristics of the compressed air treatment module to which the drainage device 18a is operatively coupled, and/or based on the climatic conditions characteristic of the place where the pneumatic plant 1 is installed.

If the check performed during step 30 is affirmative, namely a new configuration has been received, control passes to the step 32 of updating the configuration of the drainage device 18a. In particular, during step 32, the control unit of the drainage device 18a controls the respective timer so as to update the duration of the standby time interval $\Delta t_{OFF}$ to the value received during step 30.

After step 32, or after step 30 in the case where a new configuration has been received, control passes to the step 34 of draining the condensate. In particular, during step 34 the condensate accumulated in the drainage device 18a is at least partially drained.

In particular, consistently with that described with reference to Figures 2A-2D on the time trends of the signals handled by the drainage device 18a, the condensate drainage step implemented during step 34 of the method in Figure 3 starts at the beginning of an active time interval $\Delta t_{ON}$. As described in detail with reference to Figures 2A-2D, the drain solenoid valve of the drainage device 18a is opened during step 34 if, and only if, the condensate sensor detects condensate accumulated in the drainage device 18a. Once condensate is no longer detected, the drain solenoid valve is closed.

In general, the method in Figure 3 and in particular the step 34 of draining the condensate can be implemented at the same time by all the drainage devices 18a-18f of the intelligent draining system.

However, in certain cases, the available electric power for controlling the intelligent draining system might be insufficient; for example, the available electric power might be insufficient to ensure the possibility of opening all the drain solenoid valves of all the drainage devices 18a-18f of the intelligent draining system at the same time.

In these cases, the controller 24 also has the function of controlling access to electric power by the drainage devices 18a-18f; in particular, the controller 24 is configured to control the control unit of each drainage device 18a-18f so that they can open the respective drain solenoid valve only after having received an authorization signal from the controller 24. In this way, overloading a power supply circuit common to the controller 24 and the drainage devices 18a-18f is avoided. For example, the queue of requests by the drainage devices 18a-18f to open their drain solenoid valve is handled with a FIFO method, with the possibility of managing higher priorities in the event of conflicts, for example, in the case of manual operations for maintenance of the pneumatic plant 1 or in the case of any other high priority event.

After step 34, control passes to step 36 to send diagnostic data. In particular, during step 36, the drainage device 18a sends diagnostic data to the controller 24. In particular, step 36 is performed after the end of the previous active state of the drainage device 18a.

In particular, the diagnostic data comprises the identification code of the drainage device 18a (in the case where more than one drainage device is present, as in the embodiment described herein) and the drain time $\Delta t_{DRAIN}$ (the actual drain time, if necessary, after having subtracted the interval $\Delta t_{HOLD}$) related to the condensate discharge performed during step 34.

Optionally, the diagnostic data can also comprise: power supply voltage; current needed to open the drain solenoid valve; discharge frequency; notification of the presence of condensate right at the beginning of the active time interval $\Delta t_{ON}$; notification of the presence of residual condensate at the end of the discharge step 34; temperature inside the drainage device 18a (provided by a temperature sensor optionally mounted in the drainage device 18a).

Optionally, the diagnostic data could also comprise the amount of water drained during step 30. In this case, the amount of drained water is calculated on the basis of the drain time $\Delta t_{DRAIN}$, multiplying it by the nominal flow rate of the drainage device 18a. In particular, the nominal flow rate of the drainage device 18a can be controlled by a flow limiter optionally comprised in the drainage device 18a. Furthermore, the calculation of the amount of drained water can be made more accurate by replacing the nominal flow rate with the actual flow rate of the drainage device 18a, obtained on the basis of the operating pressure of the pneumatic plant 1, in a manner in itself known for an expert in the field.

Optionally, the transmission of the diagnostic data is not performed on every iteration of the method in Figure 3, but at regular time intervals, for example, following a request by the controller 24. In this case, the diagnostic data comprises an average discharge period and an optional mean discharge frequency. In a different embodiment, the sample data is sent to the controller 24 immediately after having performed the discharge.

After step 36, control passes to the step 38 of waiting until a standby time interval $\Delta t_{OFF}$ has passed following the end of the previous active state of the drainage device 18a. Once the standby time interval $\Delta t_{OFF}$ has passed, control returns to the step 30 of checking whether a new configuration for the drainage device 18a has been received.

Figure 4 schematically shows, by means of a flowchart, a control method of the drainage devices 18a-18f, implemented by the controller 24 in Figure 1.

According to the method in Figure 4, step 40, the controller 24 receives diagnostic data from any of the drainage devices 18a-18f. This diagnostic data is that sent during step 36 of the method in Figure 3. For descriptive clarity, hereinafter reference will be made to the case where the controller 24 receives diagnostic data from the first drainage device 18a during step 40. Similar considerations can be made in the case where the controller 24 receives diagnostic data from any other drainage device 18b-18f.

Then control passes to the step 42 of saving the diagnostic data received during step 40, for example, in an internal memory of the controller 24.

After step 42, control passes to the step 44 of sending the diagnostic data. In particular, during step 44, the controller 24 sends the diagnostic data received during step 40 to the data analysis module 28.

Optionally, the sending of diagnostic data received from different drainage devices 18a-18f could follow a time schedule stored in the controller 24, capable of managing simultaneous requests from multiple drainage devices 18a-18f. Alternatively, the sending takes place in the chronological order of reception, by implementing a FIFO queue. It is obvious that any other method of managing the sending is possible.

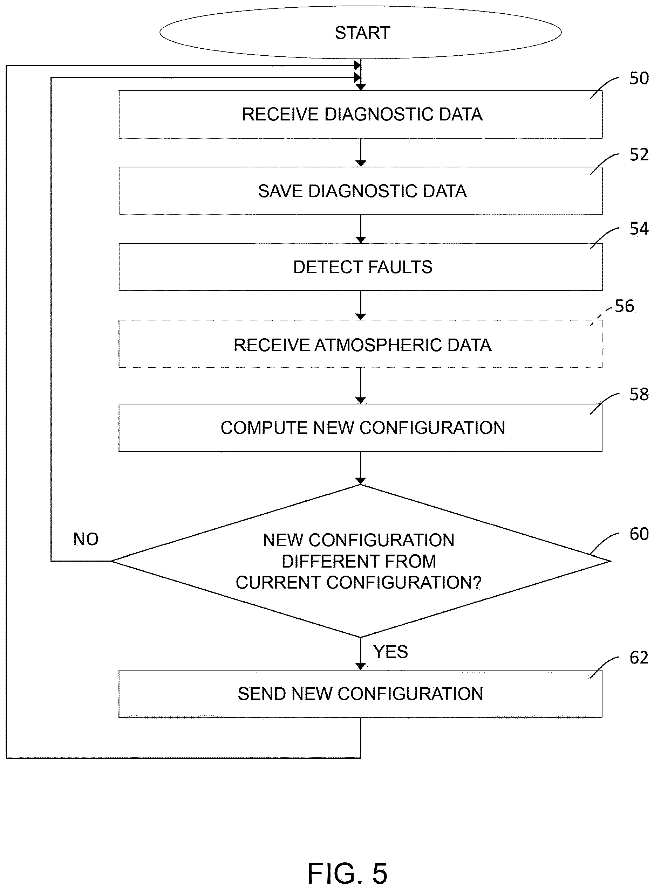

After step 44, control passes to the step 46 of the controller 24 receiving a new configuration. In particular, during step 46, the controller 24 receives a new configuration from the data analysis module 28 for the drainage device 18a for which diagnostic data was sent during step 44. This new configuration is generated by the data analysis module 28 as a result of analysis of said diagnostic data, as better described hereinafter with reference to Figure 5.

After step 46, control passes to the step 48 of sending the new configuration. In particular, during step 48, the controller 24 sends the new configuration received during step 46 to the drainage device 18a, i.e. to the drainage device for which diagnostic data was received during step 40. This new configuration sent to the drainage device 18a is thus received by the drainage device 18a during step 30 of the drainage method in Figure 3.

After step 48, the controller remains in wait to receive new diagnostic data from one of the drainage devices 18a-18f, consequently returning step 40.

Optionally, during step 46, new configurations can be received for a plurality of drainage devices 18a-18f of the intelligent draining system, and not just for drainage device 18a, for which diagnostic data was sent during step 44. In all cases, these new configurations are generated starting from said diagnostic data, and are subsequently sent the respective drainage devices 18a-18f during step 48 of the method.

It is also obvious that different iterations of the control method in Figure 4, related to different diagnostic data, can be carried out, at least partially, in parallel. For example, after sending a first diagnostic dataset (step 44) from the controller 24 to the data analysis module 28 and before the reception of a new configuration (step 46) for a first drainage device, the controller 24 can receive a second diagnostic dataset (step 40) from a second drainage device.

Figure 5 shows, by means of a flowchart, a data analysis and processing method implemented by the data analysis module 28 (if necessary, supported by the cloud infrastructure 29 to increase computational power).

The method in Figure 5 starts with the step 50 of receiving diagnostic data from the data analysis module 28 (sent, as mentioned, during step 44 of the control method in Figure 4). In particular, for descriptive clarity, hereinafter it is assumed that the diagnostic data received in step 50 was originally sent from the first drainage device 18a to the controller 24 (step 36 of the method in Figure 3). Similar considerations hold for the other drainage devices 18b-18f.

After step 50, control passes to the step 52 of saving said diagnostic data, for example in the database 29a of the cloud infrastructure 29. The saving of a series of diagnostic data over time for a same drainage device enables analysing the time trends of said diagnostic data and to possibly detect faults.

After step 52, control passes to the step 54 of detecting faults. In particular, during step 54, the diagnostic data received during step 50 is analysed, in itself and/or in relation to diagnostic data previously stored during step 52 of prior iterations of the analysis method described herein. Based on said analysis, described in detail below, faults in the operation of the pneumatic plant 1 can be detected. These faults are stored, for example, in the database 29a of the cloud infrastructure 29. The faults can also be reported to an operator, maintenance engineer and/or manager of the pneumatic plant 1. For example, the notification of faults to an operator/maintenance engineer could be directed to preventing possible blockages inside the pneumatic plant 1, by allowing immediate action in the field. Furthermore, the notification of the faults could also include the position, in the pneumatic plant 1, of the compressed air treatment module with which the fault is related, so as to reduce repair times and, in consequence, the associated costs.

In one non-limitative embodiment of the present invention, during the data analysis and processing method in Figure 5, for example, after step 54, the data analysis module 28 receives (step 56) data regarding the atmospheric conditions of the environment where the pneumatic plant 1 is located, such as atmospheric pressure and/or atmospheric temperature and/or relative atmospheric humidity. Optionally, the atmospheric data also comprises the saturation pressure and/or saturated vapour pressure. The atmospheric data can be read directly by means of a sensor installed on board the controller 24, or can be acquired via other types of weather services, for example online. The updating of the atmospheric data can be performed in real time.

After step 56, control passes to the step 58 of calculating a new configuration for the drainage device 18a, i.e. for the drainage device to which the diagnostic data received during step 50 refers, on the basis of this received diagnostic data and/or the received atmospheric data. During step 58, a new configuration can also be calculated for one or more of the other drainage devices 18b-18f, on the basis of the respective received diagnostic data and/or received atmospheric data.

In particular, the new configuration calculated during step 58 comprises a duration for a theoretical standby

time interval $\Delta t_{OFF\_T}$ for the drainage device 18a and/or for a respective theoretical standby time interval $\Delta t_{OFF\_T}$ for one or more of the other drainage devices 18b-18f, for example using the atmospheric data received during step 56.

In particular, as better described with an example provided below, the atmospheric data enables calculating an estimate of the expected amount of condensate in each compressed air treatment module to which a drainage device 18a-18f of the intelligent draining system is operatively coupled. Based on the expected amount of condensate and the nominal flow rate of each drainage device 18a-18f, it is possible to calculate the frequency with which it is preferable to activate each drainage device 18a-18f and, in consequence, estimate the theoretical duration $\Delta t_{OFF\_T}$ of the standby time interval, so as to increase the discharge efficiency of the draining system 2. Preferably, the new configuration is saved in the database 29a of the cloud infrastructure 29 and associated with the respective drainage device 18a-18f.

After step 58, control passes to the step 60 of checking if the new configuration is different from the current configuration, for example, due to climatic changes in the place where the pneumatic plant 1 is installed. Preferably, the current configuration is stored in the database 29a of the cloud infrastructure 29. Alternatively, the current configuration is sent from the controller 24 to the remote server.

If the check performed during step 60 fails, i.e. if the new configuration is unchanged with respect to the current configuration, control returns to step 50, to await receiving further diagnostic data from the same drainage device 18a or other drainage devices 18b-18f.

If the check performed during step 60 is affirmative, i.e. if the new configuration is different from the current configuration, control passes to the step 62 of sending the new configuration to the controller 24 (the new configuration is received by the controller 24 during step 46 of the control method in Figure 4).

After step 62, control returned to step 50, to await receiving diagnostic data from the same drainage device 18a or other drainage devices 18b-18f.

According to one aspect of the present invention, it is possible to perform steps 56-62 related to calculating and sending a new configuration only if faults have been detected during step 54. In this variant of the method, if no faults are detected in step 54, control returns to step 50, to await receiving new diagnostic data.

Further details are provided below on the implementation of step 54 of the analysis method in Figure 5, concerning fault detection.

As mentioned, possible faults are detected by analysing the diagnostic data received during step 50.

In particular, diagnostic data analysis can comprise a comparison with diagnostic data received and stored in the past from the same drainage device; furthermore, the analysis can comprise a comparison with diagnostic data associated with other drainage devices.

As mentioned, diagnostic data comprises a drain time $\Delta t_{DRAIN}$ of a discharge cycle of a drainage device, or an average drain time calculated for multiple discharge cycles of a same drainage device.

In particular, diagnostic data analysis can comprise a comparison between the measured drain time $\Delta t_{DRAIN}$ and the expected (theoretical) duration of the drain time for the same drainage device. As described in greater detail below, the expected duration of the drain time for a drainage device is calculated by the data analysis module 28 during step 58 of the method in Figure 5, in which the new configuration of one or more drainage devices 18a-18f is calculated based on atmospheric data.

In particular, the step of comparing the measured drain time and the expected duration of the drain time comprises checking if a variation between the expected duration of the drain time and the measured drain time is within an acceptability range, or is above an acceptability threshold, or below an acceptability threshold; for example, it is checked whether the variation is less than 10% of the measured drain time, more specifically less than 5% of the measured drain time. This value of acceptability threshold, or range, is predetermined with a default value, which can be conveniently modified by an operator or manager of the pneumatic plant 1 via the control panel 29d, for example, comprised in the cloud infrastructure 29.

Some examples of diagnostic data analysis are provided below.

In a first example of diagnostic data analysis, the drain time $\Delta t_{DRAIN}$ measured for the first drainage device 18a, operatively coupled to the compressor 4, is different from the expected duration of the drain time for the same drainage device, but the variation is within the acceptability threshold.

In this case, it is checked whether the other drainage devices 18b-18f have also recorded the same variation with respect to the respective expected drain time.

If affirmative, it is possible to assume that the measured variation is due to a change in atmospheric conditions. In consequence, faults are not reported and processing continues with the step of calculating the new configuration for all the drainage devices 18a-18f.

If negative, if the variation is reported only by the first drainage device 18a, the variation could be due to excessive contamination of a filter of the compressor 4. In consequence, the fault is logged, but not necessarily reported.

In a second example of diagnostic data analysis, the drain time $\Delta t_{DRAIN}$ measured for the first drainage device 18a, operatively coupled to the compressor 4, is different from the expected duration of the drain time for the same drainage device and the variation is also beyond the acceptability threshold.

In this case, it is checked whether the other drainage devices 18b-18f have also recorded the same variation with respect to the respective expected drain time.

If affirmative, it is possible to check if the measured variation could be due to a significant change in atmospheric conditions. In this case, faults are not reported and processing continues with the step of calculating the new configuration for all the drainage devices 18a-18f. Otherwise, it can be assumed that the plant is at a standstill, unused, or running with low air consumption.

If negative, if the variation is reported only by the first drainage device 18a, the variation could be due to excessive contamination of the filter of the compressor 4. In consequence, the fault is logged and reported. In particular, an emergency signal is sent to the controller 24, intended to trigger an emergency procedure that monitors the situation for as long as the fault remains; whilst continuing to detect the fault, once a time threshold is exceeded, for example ranging between 30 minutes and 45 minutes, intervention by a maintenance engineer is requested; for example, for the purpose of replacing the filter of the compressor 4.

In a third example of diagnostic data analysis, the drain time $\Delta t_{DRAIN}$ measured for the first drainage device 18a, operatively coupled to the compressor 4, is less than the expected duration of the drain time for the same drainage device and the variation is also beyond the acceptability threshold.

In this case, it is checked whether the drain time $\Delta t_{DRAIN}$ measured for the drainage device downstream, i.e. the second drainage device 18b, is, conversely, greater than the expected duration of the drain time.

If affirmative, it can be assumed that the cause of the variation is a possible fault on the compressor 4. In consequence, probable faults on the compressor 4 are reported and, if necessary, intervention by a maintenance engineer is requested.

In a fourth example of diagnostic data analysis, the drain time $\Delta t_{DRAIN}$ measured for the second drainage device 18b, operatively coupled to the aftercooler 6, is different from the expected duration of the drain time for the same drainage device, but the variation is within the acceptability threshold.

In this case, it is checked whether the other drainage devices 18a, 18c-18f have also recorded the same variation with respect to the respective expected drain time.

If affirmative, it is possible to assume that the measured variation is due to a change in atmospheric conditions. In consequence, faults are not reported and processing continues with the step of calculating a new configuration for each of the drainage devices 18a-18f.

If negative, if the same variation is not reported by the drainage device upstream, i.e. by the first drainage device 18a, the variation could be due to excessive contamination of a filter of the aftercooler 6. In consequence, the fault is logged, but not necessarily reported.

In a fifth example of diagnostic data analysis, the drain time $\Delta t_{DRAIN}$ measured for the second drainage device 18b, operatively coupled to the aftercooler 6, is different from the expected duration of the drain time for the same drainage device and the variation is also beyond the acceptability threshold.

In this case, it is checked whether the other drainage devices 18a, 18c-18f have also recorded the same variation with respect to the respective expected drain time.

If affirmative, it is possible to check if the measured variation could be due to a significant change in atmospheric conditions. In this case, faults are not reported and processing continues with the step of calculating the new configuration for each of the drainage devices 18a-18f. Otherwise, it can be assumed that the plant is at a standstill or unused.

If negative, if the variation is reported only by the second drainage device 18b, the variation could be due to excessive contamination of the filter, or clogging of the radiator of the aftercooler 6. In consequence, the fault is logged and reported, similarly to that described for the first drainage device 18a in the explanation of the second example of diagnostic data analysis.

In a sixth example of diagnostic data analysis, the drain time $\Delta t_{DRAIN}$ measured for the second drainage device 18b, operatively coupled to the aftercooler 6, is less than the expected duration of the drain time for the same drainage device and the variation is also beyond the acceptability threshold.

In this case, it is checked whether the drain time $\Delta t_{DRAIN}$ measured for the drainage device downstream, i.e. the third drainage device 18c, is, conversely, greater than the expected duration of the drain time.

If affirmative, it can be assumed that the cause of the variation is a possibly fault on the aftercooler 6. In consequence, probable faults on the aftercooler 6 are reported and, if necessary, intervention by a maintenance engineer is requested.

In a seventh example of diagnostic data analysis, the drain time $\Delta t_{DRAIN}$ measured for the fifth drainage device 18e, operatively coupled to the dryer 12, is different from the expected duration of the drain time for the same drainage device, but the variation is within the acceptability threshold.

In this case, it is checked whether the other drainage devices 18a-18d, 18f have also recorded the same variation with respect to the respective expected drain time.

If affirmative, it is possible to assume that the measured variation is due to a change in atmospheric conditions. In consequence, faults are not reported and processing continues with the step of calculating the new configuration for all the drainage devices 18a-18f.

If negative, if the same variation is not reported by the drainage device upstream, i.e. by the fourth drainage device 18d, the variation could be due to excessive contamination of a filter of the dryer 12. In consequence, the fault is logged and processing continues with the step of calculating the new configuration for the fifth drainage device 18e.

In an eighth example of diagnostic data analysis, the drain time $\Delta t_{DRAIN}$ measured for the fifth drainage device 18e, operatively coupled to the dryer 12, is different from the expected duration of the drain time for the same drainage device and the variation is also beyond the acceptability threshold.

In this case, it is checked whether the other drainage devices 18a-18d, 18f have also recorded the same variation with respect to the respective expected drain time.

If affirmative, it is possible to check if the measured variation is due to a significant change in atmospheric conditions. In this case, faults are not reported and processing continues with the step of calculating the new configuration for all the drainage devices 18a-18f. Otherwise, it can be assumed that the plant is at a standstill or unused.

If negative, if the variation is reported only by the fifth drainage device 18e, the variation could be due to excessive contamination of the filter of the dryer 12. In consequence, the fault is logged and reported, similarly to that described for the first drainage device 18a in the explanation of the second example of diagnostic data analysis. Furthermore, processing proceeds with the step of calculating the new configuration for the fifth drainage device 18e.

In a ninth example of diagnostic data analysis, the drain time $\Delta t_{DRAIN}$ measured for the fifth drainage device 18e, operatively coupled to the dryer 12, is less than the expected duration of the drain time for the same drainage device and the variation is also beyond the acceptability threshold.

In this case, it is checked whether the drain time $\Delta t_{DRAIN}$ measured for the drainage device downstream, i.e. the sixth drainage device 18f, is, conversely, greater than the expected duration of the drain time.

If affirmative, it can be assumed that the cause of the variation is a possibly fault on the dryer 12. In consequence, probable faults on the dryer 12 are reported and, if necessary, intervention by a maintenance engineer is requested.

In a tenth example of diagnostic data analysis, the drain time $\Delta t_{DRAIN}$ measured for either of the fourth drainage device 18d or the sixth drainage device 18f, operatively coupled to the prefilter 10 and to the filter 14, respectively, is different from the expected duration of the drain time for the same drainage device, but the variation is within the acceptability threshold.

In this case, processing proceeds similarly to that described for the fifth drainage device 18e in the case of the seventh example of diagnostic data analysis.

In an eleventh example of diagnostic data analysis, the drain time $\Delta t_{DRAIN}$ measured for either the fourth drainage device 18d or sixth drainage device 18f, operatively coupled to the prefilter 10 and to the filter 14, respectively, is different from the expected duration of the drain time for the same drainage device and the variation is also beyond the acceptability threshold.

In this case, processing proceeds similarly to that described for the fifth drainage device 18e in the case of the eighth example of diagnostic data analysis.

In a twelfth example of diagnostic data analysis, the drain time $\Delta t_{DRAIN}$ measured for the sixth drainage device 18f, operatively coupled to the filter 14, is greater than the expected duration of the drain time for the same drainage device and the variation is also beyond the acceptability threshold.

In this case, it is checked whether the drain time $\Delta t_{DRAIN}$ measured for the other drainage devices 18a-18e has the same variation.

If affirmative, as the sixth drainage device 18f is positioned at the end of the compressed air treatment pipe, the presence of water in the pneumatic plant 1 can be assumed. In consequence, a possible presence of water in the pneumatic plant 1 is reported and intervention by a maintenance engineer is requested.

In general, according to the present invention, the following faults related to each drainage device 18a-18f can be found:

- dirty filter: the detection of this fault can be diagnosed through assessment of the measured $\Delta t_{DRAIN}$ parameter. If it is considered that the time necessary to eliminate the condensation at a certain point of the plant is theoretically calculable, a significant increase (above a predetermined and updatable threshold) of the time interval $\Delta t_{DRAIN}$ corresponds with high probability to an obstruction to the passage of water through that drainage device;
- worn valve cut-off: using the same logic as in the previous point, a significantly short drain time, with respect to that expected, constitutes a diagnostics source for the state of health of the valve cut-off of the drainage device;
- float level sensor of condensate drain jammed or not working (diagnostics applicable to level-controlled drainage devices, or in any case to those provided with a float): when the onboard sensor of a drainage device detects the presence of water to discharge, a water discharge request is sent to the controller 24. If the water discharge requests, and the associated confirmations of the operation taking place, occur with too high a frequency (above a predetermined and updatable threshold), it is possible that the float of the drainage device has jammed or is malfunctioning.

Furthermore, even the possible absence of condensation in a drainage device might indicate a fault, if this fact was discordant with what was expected. The controller 24 is therefore configured to signal that a possible problem might derive from the plant unit to which the associated drainage device is physical connected.

Details are provided below on step 58 of the analysis method in Figure 5, adapted to calculate a new configuration for one or more drainage devices 18a-18f.

In general, step 58 is divided into a first sub-phase, in which the amount of condensate to drain per unit time is estimated for one or more drainage devices 18a-18f, and a second sub-phase, in which the discharge frequency necessary to drain said amount of condensate per unit time is estimated and, in consequence, the theoretical duration $\Delta t_{OFF\_T}$ of the standby intervals. Equations and concepts useful for proceeding with the description of the method of calculating a new configuration are provided below.

As is known, a quantity (measured in litres) of water $V_{H2O}$ present, in the vapour phase, in a mixture of humid air having a volume $V_{AIR}$ can be calculated via the following equation:

$$V_{H2O} = d \cdot t \cdot V_{AIR} \tag{1}$$

where $d$ is the density of the humid air mixture and $t$ is the titre of the humid air mixture. For example, $V_{AIR}$ (measured in $m^3$) can be the volume of humid air sucked in by the compressor 4. In this case, $V_{H2O}$ is the maximum amount of water present in the pneumatic plant 1. Furthermore, the equation (1) can be expressed in terms of flow rate instead of volume; in this case, $V_{AIR}$ (measured in $m^3/s$) is the volumetric flow rate of humid air sucked in by the compressor 4, i.e. the amount of humid air sucked in by the compressor 4 per unit time, while $V_{H2O}$ is the amount of water per unit time comprised in said humid air.

The density d of the mixture can be calculated via the following equation:

$$d = \frac{P - P_{vS}}{R_A \cdot T} + \frac{P_{vS}}{R_V \cdot T} \tag{2}$$

where $P$ is the atmospheric pressure (measured in Pa), $T$ is the temperature of the mixture (measured in degrees Kelvin), $R_A = 287.058$ J/(kg·K) is the specific constant of dry air, $R_V = 461.495$ J/(kg·K) is the specific constant of water vapour and $P_{vs}$ is the partial vapour pressure, or saturated vapour pressure, with $P_{vS} = U_R \cdot P_S$, where $P_S$ is the saturation pressure and $U_R$ is the relative humidity of the mixture (percentage expressed as a number ranging between 0 and 1). The saturation pressure $P_S$ can be comprised in the atmospheric data received in step 56, or obtained from tables available in the literature based on the temperature T, or calculated via the following equation:

$$P_S = \exp\left[65.81 - \frac{7066.27}{T} - 5.976\ln(T)\right] \tag{3}$$

In consequence, the density $d$ of the mixture depends only on atmospheric data, such as pressure $P$ and temperature $T$, received in step 56 of the method in Figure 5.

Furthermore, the titre $t$ of the mixture can be calculated using the following equation:

$$t = \frac{R_A}{R_V}\frac{P_{vS}}{P - P_{vS}} \qquad \text{or also} \qquad t = 0.622 \cdot \frac{P_{vS}}{P - P_{vS}} \tag{4}$$

Therefore, also the density $d$ of the mixture depends only on atmospheric data. Optionally, the saturate vapour pressure $P_{vS}$ can be received directly among the atmospheric data in step 56 of the method in Figure 5.

In consequence, by knowing atmospheric data such as the pressure, temperature and relative humidity, it is possible to calculate the amount of water in a volume of humid air, and similarly the maximum amount of condensate in a volume of humid air entering a pneumatic plant for the production and treatment of compressed air.

Once an amount of condensate to drain is known, and the characteristics of each drainage device known, it is possible to calculate the time necessary to drain said amount of condensate.

In particular, once, for example, an expected condensate flow rate $V_{exp}$ for the first drainage device 18a is known, based on the atmospheric data (pressure $P$, temperature $T$ and relative humidity $U_R$) received during step 56, it is possible to calculate the new configuration of the first drainage device 18a and, in particular, estimate the theoretical duration of the standby time interval $\Delta t_{OFF\_T}$, for example according to the following equation:

$$\Delta t_{\text{OFF\_T}} = \frac{C}{V_{\text{exp}}} \tag{5}$$

where $C$ is the condensate accumulation capacity of the first drainage device 18a. In other words, in this example, the theoretical duration of the standby time interval $\Delta t_{\text{OFF\_T}}$ calculated for the new configuration corresponds to the time necessary for reaching the maximum accumulable amount of condensate in the drainage device. In other examples, said theoretical standby duration $\Delta t_{\text{OFF\_T}}$ could be smaller, by 10% for example, to introduce safety margins.

The new configuration calculated in step 58 also comprises the new theoretical duration of the active time interval $\Delta t_{\text{ON}}$, calculated via the following equation:

$$\Delta t_{\text{ON}} = \frac{C}{s_{\text{N}}} \tag{6}$$

where $s_{\text{N}}$ is the nominal discharge flow rate of the first drainage device 18a. In other words, in this example, the preferable duration of the active time interval $\Delta t_{\text{ON}}$ corresponds to the time necessary to completely drain a drainage device in which the maximum accumulable amount of condensate has been reached.

The durations of the standby time interval $\Delta t_{\text{OFF\_T}}$ and active time interval $\Delta t_{\text{ON}}$ can be further refined with the use of machine learning algorithms or methodologies, exploiting a historical data series (e.g. saved on the database 29a). By using linear regression algorithms (e.g. based on regression of the mean square error), of a type in itself known, it is this possible to apply convergent automatic models.

It is obvious that similar considerations to those described above for drainage device 18a hold for the other drainage devices 18b-18f, for which it is also possible to apply equations (5) and (6), and/or machine learning methodologies.

According to one aspect of the present invention, the duration of the active time interval $\Delta t_{\text{ON}}$ calculated via equation (6) is the expected duration of the drain time used for the comparison, made in step 54, with the drain time $\Delta t_{\text{DRAIN}}$ measured for the same drainage device, for diagnostic purposes. This comparison comprises, in one embodiment, performing (e.g. by the controller 24) a subtraction operation between the (theoretical or expected) value of $\Delta t_{\text{ON}}$ and the (measured) value of $\Delta t_{\text{DRAIN}}$, and comparing the result of the subtraction with a (predetermined and updatable) reference value. It is obvious that the comparison operation between the values of $\Delta t_{\text{ON}}$ and $\Delta t_{\text{DRAIN}}$ can be of a different type, for example, it is possible to calculate a ratio between $\Delta t_{\text{ON}}$ and $\Delta t_{\text{DRAIN}}$ to obtain an error rate. Other forms of comparison are possible.

The diagnostics according to step 54 can take place offline, i.e. with the associated drainage device 18a-18f connected to controller 24, but disconnected from the cloud infrastructure 29, or with the drainage device 18a-18f connected to controller 24a or, in general, to a part of the (online) cloud infrastructure 29. In the first (offline) case, the diagnostics are performed on board the controller 24 and the diagnostic data is communicated to the cloud infrastructure 29 at a later time, when the connection is restored. In the second (online) case, the diagnostics are performed on board the controller 24 in real time, or with a predetermined frequency.

In the case of "offline" diagnostics, computational power is limited to just the computational resources of the associated controller 24. In any case, it is still possible to perform diagnostics based on the predictability of a malfunction by taking the values of $\Delta t_{\text{ON}}$ and $\Delta t_{\text{DRAIN}}$ into consideration.

According to a different embodiment, the diagnostics can be performed on board the drainage device, when the latter is provided with computational resources useful for that purpose.

The diagnostic assessment procedures in the two scenarios mentioned above, for level-controlled and timer-controlled types of drainage devices, are described below.

Level-controlled drainage devices

Each drainage device stores, in local memory, a variable that contains a predetermined active time interval $\Delta t_{\text{ON\_PD}}$, a variable that contains the average active time interval $\Delta t_{\text{ON\_A}}$ and a variable that contains the measured active time interval $\Delta t_{\text{DRAIN}}$. The average active time interval $\Delta t_{\text{ON\_A}}$ is calculated and updated over time by calculating the average of the measured active time intervals $\Delta t_{\text{DRAIN}}$. The diagnostics step includes, for each drainage device, calculating the error rate between the average active time interval $\Delta t_{\text{ON\_A}}$ and the measured active time interval $\Delta t_{\text{DRAIN}}$, or between the predetermined active time interval $\Delta t_{\text{ON\_PD}}$ and the measured active time interval $\Delta t_{\text{DRAIN}}$ in the case where the average active time interval $\Delta t_{\text{ON\_A}}$ is not available or has not yet been calculated (e.g. first use).

The error rate is calculated with the following formula:

$$\% \; error \; = \; (\Delta t_{ON\_A} \; / \; \Delta t_{DRAIN}) \; \cdot \; 100$$

or:

$$\% \; error \; = \; (\Delta t_{ON\_PD} \; / \; \Delta t_{DRAIN}) \; \cdot \; 100$$

By setting, in the manufacturing phase or during use, an acceptability threshold value (a modifiable parameter based on the specific nature of the plant 1) to compare with the calculated error rate, it is possible to diagnose fault situations (e.g. if the error rate exceeds the threshold, an alarm is issued).

Timer-controlled drainage devices

For this family of drainage devices, the value of the standby time interval $\Delta t_{OFF}$ is variable, and can be updated as a function of the value of the theoretical standby time interval $\Delta t_{OFF\_T}$. The theoretical active time interval $\Delta t_{ON}$ depends on the time estimated as being necessary to drain the amount of condensate accumulated by the unit of the pneumatic plant 1 to which this unit is connected (a known quantity and variable according to the unit considered).
In this case, the diagnostics envisage the operation of calculating the value of the theoretical active time interval $\Delta t_{ON}$ and making a comparison with the value of the measured active time interval $\Delta t_{DRAIN}$:

$$\% \; error \; = \; (\Delta t_{ON} \; / \; \Delta t_{DRAIN}) \; \cdot \; 100$$

The resulting error rate thus calculated, possibly parametrized for each specific pneumatic plant 1, is compared with a (predetermined, yet still updatable) reference threshold, and is used to supply a diagnostic result (e.g. if the error rate exceeds the threshold, an alarm is issued).
The procedures described herein are applicable both to the diagnostics performed on board the controller 24 (or on board each drainage device) and to the case where the diagnostics are performed at the level of the cloud infrastructure 29. However, in the latter case, it is possible to exploit the computational power made available by the cloud infrastructure 29, which can be significantly greater with respect to that available on board each drainage device. In this case, all the information related to each discharge is classified and sent to the database 29a to make this data persistent. After a certain period, which can be considered variable according to the specific configuration of the pneumatic plant 1, and in consequence with a variable amount of data to handle, the system is able to calculate the amount of water drained on average in each point of the pneumatic plant 1. This value can be obtained by considering that the number of cycles performed by each drainage device and the nominal flow rate of each one of them are known. In particular, the theoretical number of cycles, per work hour and for each drainage device (assumed here to be of the timer-controlled type), is given by the formula $3600/(\Delta t_{ON}+\Delta t_{OFF\_T})$, and the real number of cycles by the formula $3600/(\Delta t_{DRAIN}+\Delta t_{OFF})$. In this way, it is possible to define a percentage map of the actual levels of water drained at each unit of the plant 1. This measurement offers the possibility of making other diagnostics with the object of assessing the state of health of each unit of the pneumatic plant 1. A practical, non-limitative example is provided below. Considering the pneumatic plant 1 in Figure 1, it is assumed that the percentages of water drained with respect to the total are subdivided as follows:

Compressor 4: 5%
Aftercooler 6: 10 %
Tank 8: 25%
Prefilter 10: 2%
Dryer 12: 50%
Filter 14: 2%

After having confirmed the correct operation of each drainage device 18a-18f, via the first procedure described, it is assumed that the controller 24 (assisted by the data analysis module 28) records an increasing discharge percentage on the drainage device connected to the tank 8, while the behaviour of the drainage device 18a connected to the compressor 4 remains unchanged. In this situation, the controller 24 is able to signal that there is a malfunction on the aftercooler 6.
Another non-limitative example will now be considered. The amount of condensate drained from the dryer 12 drops significantly despite the other drainage devices 18a-18d and 18f maintaining operation with a constant discharge.

The controller 24, knowing the functional characteristics of the unit subjected to checking (dryer 12), is able to signal that the dryer 12 might have run out of the gas needed to cool the compressed air.

Summarizing, depending on the (significant) variance of the percentages of water drained in each point of the plant 1, the cloud diagnostics are able to predict which unit of the plant 1 might be defective or subject to malfunction, and therefore in need on maintenance.

The drainage device 18f positioned on the last unit of the plant 1 merits special attention. If the percentage of condensate drained was above the threshold limit, it would mean having water arrive to the user of the plant 1. In this case, the system will send an alarm notification to avoid any damage to the user's assets.

The evaluation of the cases described can be further refined by the use of machine learning solutions. The typical approach for this type of problem is the use of decision trees, trained with stored historical data series.

An example of calculating a new configuration for the pneumatic plant 1, implementing step 58 in Figure 5, is provided below.

First of all, the volume of water sucked into the compressor 4 per unit time is calculated. For example, knowing that in the place where the pneumatic plant is installed, the atmospheric pressure is $P = 1.08$ bar, the temperature is $T = 18\ °C$ and the relative humidity is $U_R = 0.68$, by applying equation (4), an inlet titre $t = 8.1941 \cdot 10^{-3}$ is obtained, and by applying equation (2), an inlet density $d = 1.2859\ kg/m^3$ is obtained. Therefore, knowing that the flow rate of the incoming humid air, i.e. the flow rate of humid air sucked in by the compressor, is $V_{AIR} = 30\ m^3/min$, by applying equation (1), a water flow rate entering the compressor 4 equal to $V_{H2O} = 18.9662\ l/h$ is obtained. This water flow rate $V_{H2O}$ entering the compressor 4 is equal to the total water flow rate entering the pneumatic plant 1 per unit time.

Then the temperature $T_a$ of the air leaving the compressor 4 is calculated via the following equation:

$$T_a = T(P/P_a)^{\frac{k-1}{k}} \tag{7}$$

where $P_a$ is the operating pressure to which the air is compressed by means of the compressor 4, for example $P_a = 7.5$ bar, while $k = C_{PV}/C_{PA}$ is the ratio between the specific heat of the water vapour $C_{PV} = 1.005\ kJ/(kg \cdot K)$ and the specific heat of the dry air $C_{PA} = 1.82\ kJ/(kg \cdot K)$. Equation (7) gives $T_a = 42.87\ °C$.

Then, starting from the pressure $P_a$ and temperature $T_a$ of the air mixture leaving the compressor 4, it is possible to calculate the density $d_a$ and titre $t_a$ of the mixture after the compressor 4; in this example, the titre is equal to $t_a = 7.1176 \cdot 10^{-3}$ and the density equal to $d_a = 8.2319\ kg/m^3$.

Furthermore, as is known, to obtain the actual flow rate $V_a$ of the compressor 4 it is necessary to divide the nominal flow rate $V_{an}$ of the compressor 4 by the operating pressure $P_a$ of the compressor 4. For example, for a nominal flow rate $V_{an} = 30\ m^3/min$, an actual flow rate $V_a = 4\ m^3/min$ is obtained.

Then, once the actual flow rate and the titre of the mixture after the compressor 4 is known, it is possible to apply equation (1) to obtain a quantity of water $V_{H2Oa} = d_a \cdot t_a \cdot V_a$ contained in the air leaving the compressor 4 and passing through pneumatic pipe 16a. In particular, in this example, $V_{H2Oa} = 14.0619\ l/h$ is obtained. As $V_{H2Oa}$ is less than $V_{H2O}$, it is obvious that part of the water entering the pneumatic plant 1 is converted into condensate in the compressor 4.

Therefore, the amount of condensate $V_{ca}$ generated in the compressor 4, and to discharge via the first drainage device 18a, is equal to the difference between the amount of water $V_{H2O}$ entering the pneumatic plant and the amount of water $V_{H2Oa}$ in the compressed air leaving the compressor 4. In this example, $V_{ca} = V_{H2O} - V_{H2Oa} = 4.9042\ l/h$ is obtained.

It is therefore possible to calculate the preferable (theoretical) duration of the standby time interval $\Delta t_{OFF\_T}$ for the first drainage device 18a by applying equation (5), where the expected condensate flow rate $V_{exp}$ is equal to parameter $V_{ca}$, as calculated above.

Regarding the preferable duration of the active time interval $\Delta t_{ON}$, it is sufficient to apply equation (6) knowing the characteristics of the first drainage device 18a.

Similar considerations to those described for the calculation of the new configuration for the first drainage device 18a hold for the calculation of the new configuration for the second drainage device 18b, operatively coupled to the aftercooler 6, and for the fifth drainage device 18e, operatively coupled to the dryer 12.

For example, for the second drainage device 18b it is necessary to consider that the air leaving the aftercooler 6 will have a temperature $T_b$ lower than the temperature $T_a$ of the air leaving the compressor 4.

The temperature variation imposes recalculating the titre $t_b$ and the density $d_b$ of the mixture leaving the aftercooler 6, while in the absence of a pressure variation it can be assumed that the air flow rate $V_b$ leaving the aftercooler 6 is equal to the flow rate $V_a$ leaving the compressor 4. Once the aforementioned parameters are calculated, it is possible to obtain the water flow rate $V_{H2Ob} = t_b \cdot d_b \cdot V_b$ within the air leaving the aftercooler 6, and therefore the amount of condensate $V_{cb} = V_{H2Oa} - V_{H2Ob}$ generated in the aftercooler 6.

Once the amount of condensate $V_{cb}$ is known, it is therefore possible to calculate the preferable duration of the standby time interval $\Delta t_{OFF\_T}$ and the active time interval $\Delta t_{ON}$ for the second drainage device 18b. For example, if the second drainage device 18b has a nominal discharge flow rate $S_{Nb}$ = 0.09 l/s and a condensate accumulation capacity $C_b$ = 0.2 1, a theoretical duration of the active interval equal to $\Delta t_{ON}$ = 2.22 s is obtained.

It is also possible that a drainage device is operatively coupled to a compressed air treatment module for which it is possible to accurately estimate an expected condensate flow rate as described above for the compressor 4, the aftercooler 6 and the dryer 12.

For example, it is not possible to accurately estimate the amount of water that might condense for the tank 8, and so this value can be deduced from empirical tests carried out on pilot pneumatic plants, and/or expressed as a function of the amount of water $V_{H2O}$ entering the compressor 4 in the pneumatic plant 1 by sucking in humid air. For example, the percentage of condensate in units for which the flow rate is not precisely known is estimated on the basis of the number of cycles multiplied by the flow rate of the drainage device connected to it.

In general, the data analysis module 28 is configured to store information on each air treatment module 4-14 comprised within the pneumatic plant 1. In particular, considering that any air treatment module 4-14 is configured to receive a respective incoming airflow and provide a respective outgoing airflow resulting from the incoming airflow, the data analysis module 28 is configured to receive, for each air treatment module 4-14, respective air treatment parameters indicative of the treatment of the respective incoming airflow.

In particular, the air treatment parameters comprise a first pressure variation factor, a first temperature variation factor and a first relative humidity variation factor. Each of said variation factors is, for example, expressed as a percentage and allows, starting from the pressure, temperature and relative humidity of an incoming airflow, respectively calculating the pressure, temperature and relative humidity of the outgoing airflow resulting from the air treatment. It is obvious that in certain cases, the variation factors can be null, such that a pressure, temperature or relative humidity of an airflow remain unchanged following passage through an air treatment module. Furthermore, it is possible to assume that the pneumatic pipes 16a-16e enable coupling two consecutive air treatment modules in a way such that the pressure, temperature, relative humidity and flow rate of an outgoing airflow of one air treatment module are respectively equal to the pressure, temperature, relative humidity and flow rate of the incoming airflow of the next air treatment module.

By knowing the atmospheric data and therefore the pressure, temperature and relative humidity of the air sucked in by the compressor 4, it is therefore possible for the data analysis module 28 to estimate the pressure, temperature and relative humidity of each airflow passing through the pneumatic pipes 16a-16f of the pneumatic plant 1.

An application example of machine-learning algorithms/procedures, applicable to the context of the present invention, is described below.

Here, the term "machine learning" means a capacity of the system according to the present invention for self-learning from experience, with the objective of increasing efficiency. Machine learning is closely linked to pattern recognition and the computational theory of learning, and explores the study and construction of algorithms that can learn from datasets and make predictions based on them, inductively building a model based on samples. In principle, machine learning operates on the basis of two distinct approaches, which allow distinguishing two subcategories of machine learning, depending on whether complete examples (samples) are used for building the model (supervised learning), or whether the software is left to work without any "help" (unsupervised learning).

In supervised learning, once the model that leads to solving a specific set of problems or that appears to solve the assigned types of problem in a consistent manner is understood, it will be possible to reutilize the function to answer any other similar problem.

In the case unsupervised machine learning, the system is only provided with datasets, without indication of the expected or correct outcome. According to this second method, the purpose of this is to "trace" the hidden schemes and models, i.e. to identify a logical structure in the input data without this data having been classified beforehand.

Regarding the determination of theoretical values $\Delta T_{OFF\_T}$ and $\Delta T_{ON}$ by exploiting machine learning algorithms, a supervised learning approach is described herein. It is obvious, however, that an unsupervised approach could be applied, without departing from the scope of the present invention.

The draining system 2 knows the characteristics of the plant 1 (e.g. as mentioned, certain technical specifications of the units that form the plant 1 can be entered by the user via a configuration page). Whereas opportune sensors provide data (read during operation of the system 2) regarding the environmental conditions and the real values of the drain times of the drainage devices 18a-18f.

If all of this data is put together, a table is obtained of the type shown below, purely by way of non-limitative example, (where the symbol "?" represents a data item to be determined via machine learning):

| Unit | Dew point [°C] | Temperature [°C] | Humidity [%] | Atmospheric pressure [bar] | $\Delta T_{DRAIN}$ [ms] | $\Delta T_{OFF}$ [ms] |
|------|----------------|------------------|--------------|----------------------------|----------------|--------------|
| **Dryer** | 4 | 35.4 | 26 | 951.2 | 173 | 236208 |
| **Dryer** | 4 | 35.5 | 25.6 | 951.1 | 181 | 210471 |

(continued)

| Unit | Dew point [°C] | Temperature [°C] | Humidity [%] | Atmospheric pressure [bar] | $\Delta T_{DRAIN}$ [ms] | $\Delta T_{OFF}$ [ms] |
|------|----------------|------------------|--------------|----------------------------|-------------------------|-----------------------|
| **Dryer** | 4 | 35.7 | 24.9 | 951.2 | 175 | 224925 |
| **Dryer** | 4 | 35.2 | 25.4 | 951.2 | 174 | 252321 |
| **Dryer** | 4 | 35.1 | 25.5 | 951.2 | 183 | 207124 |
| **Dryer** | 4 | 34.8 | 25.9 | 951.3 | 185 | 260560 |
| **Dryer** | 4 | 34.5 | 26.4 | 951.2 | 171 | 224103 |
| **Dryer** | 4 | 34.2 | 26.8 | 951.2 | 170 | 265116 |
| **Dryer** | 4 | 34.3 | 25.3 | 951.3 | ? | ? |

The dataset thus formed provides a learning map of the algorithm. A multivariate linear regression function can be used for determining the outputs:

$$Y = \beta_0 + X_1\beta_1 + X_2\beta_2 + \cdots + X_n\beta_n$$

where:

Y indicates the value that it is wished to predict (in this case, theoretical $\Delta T_{ON}$ or $\Delta T_{OFF\_T}$ from machine learning) ;
$X_i$ constitute the variables that it is assumed can have an effect on Y;
$\beta_i$ are said regressors, namely the weights that the function will use to determine the value of Y.

The determination of the regressors takes place, as anticipated, via machine learning. The above-indicated function is supplied with a dataset, known as the "training set", in which all the variables, except for β, are known.
With the iteration of the regression function, for each record in the training set, the weight values to associate with each variable X are obtained in order to determine the model that most closely matches the provided outputs.
The model thus obtained (F(x)) occupies the role of determining a learning-based value, which consequently satisfied the need of determining values for the theoretical $\Delta T_{ON}$ and $\Delta T_{OFF\_T}$ intervals.
For simplicity of description, useful but optional steps that result in obtaining a clean and consistent training set are omitted herein. For example, to obtain a good model, it is opportune that the data is "cleaned" of any outliers or overfitting, i.e. misrepresentative data items (outside the required standard), or having too high a number of records in the training dataset, which could risk non-convergence of the algorithm.
A specific example regarding determination of the threshold for dirty filter diagnostics is provided below.
It has been previously described that determination of the dirty filter state of a drainage device 18a-18f mainly depends on the variance and progressive deviation of $\Delta T_{DRAIN}$ (real value) from $\Delta T_{ON}$ (theoretical value) .
The threshold beyond which a filter cleaning operation is considered opportune is set, according to this detection method, in an empirical manner, i.e. based on the experience acquired from operation of the system.
The object is to find an algorithm that, constantly calibrated, provides a threshold value in keeping with the specific conditions (environmental and plant engineering) in which the system 2 works. It follows that the purpose of the diagnostics is to predict the dirty filter state, promptly signalling any deterioration before total blockage of the passage of the condensate through the condensate drain outlet occurs.
The analysis performed on pilot plants by the applicant has demonstrated that the trend of $\Delta T_{DRAIN}$ over time is non-linear, or rather, from the moment that the filter of the condensate drain starts to become dirty, $\Delta T_{DRAIN}$ grows exponentially over time.
The approach used for determining the threshold value is carried out following analysis of the value of $\Delta T_{DRAIN}$ within a predetermined time span, i.e. $\Delta T_{DRAIN}$ continues to grow until the total blockage of the filter.
The model that best represents this type of problem is described by a non-linear function with an exponential trend:

$$Y_t = f(t) + u_t$$

where f(t) describes the systemic behaviour over time and $u_t$ is the error at that time.

As mentioned, f(t) is an exponential function, e.g. of the type:

$$f(t) = \alpha_0 e^{\alpha_1 t}$$

in which determination of the values $\alpha_0$ and $\alpha_1$ is achieved iteratively.

At an initial time $t_0$, the variables $\alpha_0$ and $\alpha_1$ are set to 0 with $u_t$ equal to the default $\Delta T_{ON}$ (stored in the manufacturing phase in the local memory of the drainage device). Time $t_0$, instead, corresponds to the moment when a new drainage device is installed in a plant (e.g. in plant 1).

At predetermined intervals (e.g. once a day) the effectiveness of Y(t) is evaluated on the basis of the $\Delta T_{DRAIN}$ received. In the event of an error, $\alpha_0$ and $\alpha_1$ are re-calculated so as to make the exponential function more similar to the real situation.

For example, the following table can be considered:

| time [N/D] | $Y_t = f(t) + u_t$ | $\Delta T_{DRAIN}$ [ms] |
|---|---|---|
| 1 | 187.404958 | 191 |
| 2 | 187.546636 | 189 |
| 3 | 187.737881 | 182 |
| 4 | 187.996035 | 179 |
| 5 | 188.344507 | 191 |
| 6 | 188.814894 | 187 |
| 7 | 189.449851 | 202 |
| 8 | 190.306953 | 206 |
| 9 | 191.46392 | 183 |
| 10 | 193.025661 | 204 |
| 11 | 195.133792 | 207 |
| 12 | 197.97947 | 181 |
| 13 | 201.820735 | 200 |
| 14 | 207.005899 | 198 |
| 15 | 214.005139 | 202 |
| 16 | 223.453125 | 241 |
| 17 | 236.206572 | 242 |
| 18 | 253.421925 | 262 |
| 19 | 276.66022 | 279 |
| 20 | 308.028638 | 289 |
| 21 | 350.371573 | 361 |
| 22 | 407.528557 | 397 |
| 23 | 484.682415 | 488 |
| 24 | 588.829229 | 604 |
| 25 | 729.412724 | 729 |
| 26 | 919.180593 | 938 |
| 27 | 1175.34042 | 1171 |
| 28 | 1521.12002 | 1502 |

(continued)

| time [N/D] | $Y_t = f(t) + u_t$ | $\Delta T_{DRAIN}$ [ms] |
|---|---|---|
| 29 | 1987.87367 | 1975 |
| 30 | 2617.92518 | 2634 |
| 31 | 3468.40576 | 3485 |
| 32 | 4616.43447 | 4624 |

It should be noted that the value of function Y(t) approaches, apart from a negligible error, the value of $\Delta T_{DRAIN}$ and therefore it can be assumed that it is possible to predict the value of the drain time in subsequent periods (time > 33).

A value K, the same for all condensate drains, is now introduced, which indicates the maximum drain time, beyond which it can be affirmed that the filter is blocked (end of scale).

If the technical time that allows services to plan maintenance operations is then considered, it is possible to estimate when the diagnostics must necessarily notify a dirty filter event.

Consider, for example, the case where it is estimated that the end of scale K is equal to 4000 and that the time necessary for the maintenance operation has value 5. The values of the previous table are now reconsidered.

Following the above-described logic, the system will interrogate the model, requesting the value of $\Delta T_{DRAIN}$, calculated via machine learning, for a period 5 times further on. Thus, if currently at period 24, the system will check if at time 29 the estimated $\Delta T_{ON}$ will be beyond the end of scale value. With the same reasoning, having considered K=4000, it is certain that at period 27, with $\Delta T_{DRAIN}$>1000, the system will signal a dirty filter fault.

An example is now provided regarding reliability evaluation of a unit (which drainage device/condensate drain is it preferable to install on a given unit of the plant 1).

It is possible to obtain this information by classifying the units of the plant 1 in relation to the notifications sent. To do this, it is necessary to know the characteristics of the plant unit (data entered in the initial configuration phase by the user who carried out the installation of the system 2) and classify it by type. For each family, a field is available for the date of when the first notification regarding a maintenance operation was sent.

By applying the average of this data item to each family of units, it can be predicted after how much time it is likely that the system reports a maintenance request. For example, (the symbol "?" represents a data item to be determined via machine learning):

| Unit | Flow rate | Dew point | Condensate drain model | Date of installation | Date of first maintenance |
|---|---|---|---|---|---|
| Dryer | 30 | 4 | LD100 Smart | 01/01/2018 | 20/11/2018 |
| Dryer | 60 | 4 | LD100 Smart | 01/02/2018 | 15/09/2018 |
| Dryer | 15 | 4 | LD100 Smart | 26/03/2018 | 03/10/2018 |
| Dryer | 45 | 4 | LD100 Smart | 15/06/2018 | 17/11/2018 |
| Dryer | 50 | 8 | LD100 Smart | 04/04/2018 | ? |

The classification takes place by grouping units with the same characteristics into families, e.g. all the dryers have the same dew point and model of drainage device.

The linear regression algorithm, considering the different flow rates and the dates of installation, estimates what will be the presumed date of the first maintenance operation.

The objective is not that of providing the end user with this date, but to check whether this event has effectively occurred. On the dashboard for the service user, a menu item is shown in which the user must enter the error detected and the type of maintenance operation carried out to remedy that fault.

This information constitutes the input to obtain a classification according to which the system is able to determine that dryers with a given flow rate and a given dew point guarantee more or less frequent maintenance for the same dryer, but coupled with a different drainage device.

From examination of the characteristics of the invention set forth herein, the advantages that can be attained therewith are evident.

For example, the fact that the data analysis module 28 is configured to acquire atmospheric data related to the environment where the pneumatic plant is located, estimate the condensate flow rate generated inside the pneumatic plant on the basis of said atmospheric data and calculate a theoretical standby time for each drainage device of the draining system, enables automatic calibration of the drainage devices. In consequence, in the case where the drainage devices are timer-controlled drainage devices with a condensate sensor, it is possible to increase their discharge efficiency and/or make them reconfigurable as a function of changes in climatic conditions, without increasing the complexity or costs of the drainage devices. Furthermore, storing the compressed air treatment parameters of the various air treatment modules of the pneumatic plant 1 enables making an accurate estimate of the water flow rate, in the vapour phase, comprised within the flows of compressed air inside the pneumatic plant.

Furthermore, the possibility of accurately estimating the water flow rate comprised within the flows of compressed air inside the pneumatic plant enables accurately estimating the condensate flow rate generated in each compressed air treatment module comprised in the pneumatic plant.

Furthermore, the possibility of accurately estimating the condensate flow rate generated in each compressed air treatment module enables accurately estimating a theoretical drain time and a theoretical standby time for each drainage device comprised in the draining system. In consequence, it is possible to automatically calibrate each drainage device such that the actual standby time for each drainage device corresponds to the theoretical standby time.

Furthermore, the possibility of accurately estimating a theoretical drain time for each drainage device enables comparing the theoretical drain time with an actual drain time so as to detect faults in the operation of the drainage device or of the compressed air treatment module to which it is operatively coupled.

Furthermore, the presence of a controller operatively coupled to each drainage device by means of a data bus enables managing the sending of diagnostic data and the reception of new calibration configurations using a precise time schedule adapted to avoid data transmission conflicts.

Furthermore, the presence of a data bus adapted to provide an electrical power supply enables managing access to electrical power by the drainage devices, avoiding overloading an electrical power supply common to all the drainage devices.

Finally, it is clear that modifications and variants can be made to the invention set forth herein without departing from the scope of the present invention, as defined in the appended claims.

For example, it is evident that the cloud infrastructure could be shared by a plurality of draining systems according to one embodiment of the present invention. For example, different controllers of different draining systems could be in bidirectional communication with a same data analysis module or respective remote servers comprised in a same cloud infrastructure.

Furthermore, the local network is optionally expandable through the integration of further sensors or actuators, such as flow sensors, in-line dew point sensors, temperature, humidity and local pressure meters, or remotely controlled valves. Any data collected integrates the climatic data used for the formulation of new configurations of the drainage devices. The diagnostic functionality can also be extended to the sensors or the valves and optional accessories.

Furthermore, as mentioned, the drainage devices 18a-18f can be of different types and not necessarily timer-controlled drainage devices; for example, the drainage devices 18a-18f could be drainage devices with a maximum and minimum level sensor. In this case, the presence of the level sensor ensures that, in principle, it is not necessary to calculate the expected condensate flow rate $V_{exp}$ in order to reprogram the drainage device, as the maximum level sensor enables establishing in real time when to interrupt a standby interval and the minimum level sensor enables establishing in real time when to interrupt an active interval.

However, even for level-sensor drainage devices, the advantageous technical effects, linked to the diagnostic data analysis described with reference to the method in Figure 5, remain. In particular, in the case of level-sensor drainage devices, the diagnostic data collected and sent during step 36 of the method in Figure 3 comprise both the drain time and the standby time (condensate accumulation), so as to be able to calculate the discharge frequency; it is therefore possible to compare an expected discharge period (or frequency) with a measured discharge period (or frequency), in order to monitor the correct operation of the pneumatic plant in which the draining system is installed. It should be noted that, in the case of using level-controlled drainage devices, the number of cycles $N_{CL}$ per work hour is calculated as $N_{CL} = (water\ present)/C$, where $C$ is the accumulation capacity of the tank of the drainage device considered. The theoretical standby $\Delta t_{OFF\_T}$ value is instead calculated as $(3600/N_{CL}) - \Delta t_{ON}$.

In the case of level-controlled condensate drains, it is possible to make a comparison between the actual time interval $\Delta t_{OFF}$ between consecutive discharges, measured for the associated drainage device, and the theoretical value $\Delta t_{OFF\_T}$ that this time interval should have had (for example, $\Delta t_{OFF\_T}$ is calculated as a function of environmental parameters, such as temperature and/or humidity and/or pressure, as previously mentioned). From the outcome of this comparison, it therefore possible to obtain a diagnosis of the state of operation of the plant 1 and/or the associated discharge device. The comparison may include the operation of calculating a ratio between the values of $\Delta t_{OFF\_T}$ and $\Delta t_{OFF}$ (calculation of an error rate), or a subtraction between these values. The result of these operations can then be compared with a reference threshold or with values of an acceptability range.

Furthermore, the data analysis module 28 could be absent in other embodiments; in this case, the data analysis and processing method in Figure 5 is implemented by the controller 24.

Furthermore, by exploiting machine learning models for diagnostics on the operation of the plant 1, in addition to the theoretical estimation of operating and standby times, the present invention enables performing more demanding tasks from the computational viewpoint. In fact, in addition to the predictive wear analysis of the drainage devices, it is also possible to provide diagnostics on possible malfunctions or faults of other units or components of the plant 1, as the database 29a makes information related to all the drainage devices 18a-18f and all the units that form the plant 1 available to the modules 24 and 28. Cross-analyses are thus possible.

Furthermore, it is possible to place an online platform (e.g. in the form of a web site) at the disposal of the end user of the plant 1, which can be used for managing the service offered by the plant 1. Through access credentials, the user can have full control of all the operations necessary for management of the installed plant (or plants). These functions are also available to the plant's maintenance engineers. It is thus possible to check the trend of the real $\Delta t_{DRAIN}$ and $\Delta t_{OFF}$ parameters of each drainage device in real time, display the state of wear of the mechanical parts of the drainage devices, and decide the events for which it is wished to receive a notification. The system can also comprise functions for automatically sending notifications (on various channels, e.g. e-mail, SMS, or similar) regarding problems found by the diagnostics.

**Claims**

1. A draining system (2) for draining condensate in a compressed air treatment plant (1) that comprises an air treatment module (4; 6; 8; 10; 12; 14), the draining system (2) comprising:

   - a drainage device (18a; 18b-18f), operatively coupled to said air treatment module, adapted to drain (34) condensate generated in the air treatment module; and
   - a data analysis module (24; 28) operatively coupled to the drainage device (18a; 18b-18f) and configured to acquire operating data of the drainage device (18a; 18b-18f) and perform, on the basis of said acquired operating data, a diagnosis of the functioning of at least one among: said air treatment plant (1), said air treatment module (4; 6; 8; 10; 12; 14) and said drainage device (18a; 18b-18f).

2. The draining system according to claim 1, wherein the operation of performing diagnosis of the functioning includes acquiring atmospheric data ($P, T, U_r$) related to an environment in which the air treatment plant (1) is located, and comparing the acquired operating data with the expected operating data according to said atmospheric data ($P, T, U_r$).

3. The draining system according to claim 1 or 2, wherein said acquired operating data includes an actual condensate discharge time interval ($\Delta t_{DRAIN}$) of the drainage device (18a; 18b-18f) .

4. The draining system according to claim 3, wherein the data analysis module (24; 28) is further configured to calculate a theoretical condensate discharge time interval ($\Delta t_{ON}$) of the drainage device (18a; 18b-18f),
   wherein the operation of performing the diagnosis of the functioning includes comparing the theoretical condensate discharge time interval ($\Delta t_{ON}$) with the actual condensate discharge time interval ($\Delta t_{DRAIN}$),
   the data analysis module (24; 28) being further configured to generate a discharge alert signal in the case where a result of said comparison does not respect a condition of discharge acceptability.

5. The draining system according to claim 4, wherein the theoretical condensate discharge time interval ($\Delta t_{ON}$) is given by the ratio between the condensate accumulation capacity of the drainage device and the nominal discharge flow rate of the drainage device.

6. The draining system according to claim 4 or 5, wherein the comparison between the theoretical condensate discharge time interval ($\Delta t_{ON}$) and the actual condensate discharge time interval ($\Delta t_{DRAIN}$) comprises calculating a ratio between the theoretical discharge time interval ($\Delta t_{ON}$) and the actual discharge time interval ($\Delta t_{DRAIN}$), or a difference between the theoretical discharge time interval ($\Delta t_{ON}$) and the actual discharge time interval ($\Delta t_{DRAIN}$),
   the data analysis module (24; 28) being further configured to generate said discharge alert signal in the case where a result of said ratio, or difference, operation between the theoretical discharge time interval ($\Delta t_{ON}$) and the actual discharge time interval ($\Delta t_{DRAIN}$) is a value outside of a discharge acceptability range.

7. The draining system according to any one of claims 4 to 6, wherein said discharge alert signal comprises an identification parameter of the air treatment module to which the drainage device is operatively coupled.

8. The draining system according to any one of the preceding claims, wherein the drainage device is a level-controlled drainage device, and wherein said operating data acquired from the drainage device (18a; 18b-18f) includes an actual standby time interval ($\Delta t_{OFF}$) between temporally mutually successive condensate discharges carried out by the drainage device (18a; 18b-18f) .

9. The draining system according to claim 8, wherein the data analysis module (24; 28) is further configured to calculate a theoretical standby time interval ($\Delta t_{OFF\_T}$) between temporally mutually successive condensate discharges carried out by the drainage device (18a; 18b-18f), wherein the operation of performing the diagnosis of the functioning includes comparing the theoretical standby time interval ($\Delta t_{OFF\_T}$) with the actual standby time interval ($\Delta t_{OFF}$), the data analysis module (24; 28) being further configured to generate a standby alert signal in the case where a result of said comparison is a value outside of a standby acceptability range.

10. The draining system according to claim 9, wherein the theoretical standby time interval ($\Delta t_{OFF\_T}$) is given by the ratio between the condensate accumulation capacity of the drainage device and an expected condensate flow rate for the drainage device.

11. The draining system according to either claim 9 or 10, wherein the comparison between the theoretical standby time interval ($\Delta t_{OFF\_T}$) and the actual standby time interval ($\Delta t_{OFF}$) comprises calculating a ratio between the theoretical standby time interval ($\Delta t_{OFF\_T}$) and the actual standby time interval ($\Delta t_{OFF}$), or a difference between the theoretical standby time interval ($\Delta t_{OFF\_T}$) and the actual standby time interval ($\Delta t_{OFF}$), the data analysis module (24; 28) being further configured to generate said standby alert signal in the case where a result of said ratio, or difference, operation between the theoretical standby time interval ($\Delta t_{OFF\_T}$) and the actual standby time interval ($\Delta t_{OFF}$) is a value outside of a standby acceptability range.

12. The draining system according to claim 11, wherein said standby alert signal comprises an identification parameter of the air treatment module to which the drainage device is operatively coupled.

13. The draining system according to any one of the preceding claims, wherein said operating data acquired from the drainage device (18a; 18b-18f) further comprises one or more from among: a power supply voltage of the drainage device (18a; 18b-18f); a temperature inside the drainage device (18a; 18b-18f); and a condensate drainage frequency of the drainage device (18a; 18b-18f) .

14. The draining system according to claim 13 when dependent upon claim 3, wherein said acquired operating data of the drainage device (18a; 18b-18f) further comprises one or more from among: notification of the presence of condensate right at the beginning of the actual condensate discharge time interval ($\Delta t_{DRAIN}$); notification of the presence of residual condensate at the end of the actual condensate discharge time interval ($\Delta t_{DRAIN}$); and an amount of condensate drained during the actual condensate discharge time interval ($\Delta t_{DRAIN}$).

15. The draining system according to claim 1, wherein the drainage device (18a; 18b-18f) is a timer-controlled drainage device including a local memory adapted to store a value of an actual standby time ($\Delta t_{OFF}$) between temporally mutually successive condensate discharges carried out by the drainage device (18a; 18b-18f), the data analysis module (24; 28) being further configured to:

acquire (56) atmospheric data ($P$, $T$, $U_r$) related to an environment in which the air supply plant (1) is located, estimate (58), on the basis of said atmospheric data, a flow rate of said condensate ($V_{ca}$), calculate (58) a value of a theoretical standby time ($\Delta t_{OFF\_T}$) inversely proportional to the flow rate of said condensate, and update (58) the value of the actual standby time ($\Delta t_{OFF}$) with the value of the theoretical standby time ($\Delta t_{OFF\_T}$).

16. The draining system according to any one of the preceding claims, wherein the operation of performing the diagnosis of the functioning includes performing one or more machine learning algorithms.

17. A compressed air treatment plant (1) comprising:

- a draining system (2) according to any one of claims 1 to 16; and
- at least one air treatment module (4; 6; 8; 10; 12; 14), wherein said drainage device (18a; 18b-18f) is operatively coupled to the air treatment module to drain a condensate that, in use, is generated at the air treatment module.

18. The plant according to claim 17, wherein the air treatment module is one of: a compressor (4), a aftercooler (6), a tank (8) or a dryer (12).

**19.** The plant according to claim 17 or 18, wherein the data analysis module (24; 28) is mounted on board the drainage device (18a; 18b-18f).

**20.** The plant according to claim 17 or 18, wherein the data analysis module (24; 28) is part of a remote infrastructure (29), communicatively coupled to the drainage device (18a; 18b-18f) by means of a data bus (26).

**21.** A diagnostics method for a compressed air treatment plant (1) comprising a condensate draining system (2) that includes at least an air treatment module (4; 6; 8; 10; 12; 14) and a drainage device (18a; 18b-18f) operatively coupled to the air treatment module to drain a condensate of the air treatment module, the method comprising the steps of:

- acquiring operating data of the drainage device (18a; 18b-18f); and
- performing, on the basis of the acquired operating data, a diagnosis of the functioning on at least one among: said air treatment plant (1), said air treatment module (4; 6; 8; 10; 12; 14) and said drainage device (18a; 18b-18f).

**22.** The method according to claim 21, wherein the step of performing diagnosis of the functioning includes acquiring atmospheric data ($P, T, U_r$) related to an environment in which the air treatment plant (1) is located, and comparing the acquired operating data with the expected operating data according to said atmospheric data ($P, T, U_r$).

**23.** The method according to claim 21 or 22, wherein said operating data acquired from the drainage device (18a; 18b-18f) includes an actual condensate discharge time interval ($\Delta t_{DRAIN}$) of the drainage device (18a; 18b-18f).

**24.** The draining system according to claim 23, further comprising the step of calculating a theoretical condensate discharge time interval ($\Delta t_{ON}$) of the drainage device (18a; 18b-18f), and wherein the step of performing diagnosis of the functioning includes comparing the theoretical condensate discharge time interval ($\Delta t_{ON}$) with the actual condensate discharge time interval ($\Delta t_{DRAIN}$).

**25.** The method according to any one of claims 21 to 24, wherein the drainage device is a level-controlled drainage device, said acquired operating data of the drainage device (18a; 18b-18f) including an actual standby time interval ($\Delta t_{OFF}$) between temporally mutually successive condensate discharges carried out by the drainage device (18a; 18b-18f).

**26.** The method according to claim 25, further comprising the step of calculating a theoretical standby time interval ($\Delta t_{OFF\_T}$) between temporally mutually successive condensate discharges carried out by the drainage device (18a; 18b-18f), and wherein the step of performing diagnosis of the functioning includes comparing the theoretical standby time interval ($\Delta t_{OFF\_T}$) with the actual standby time interval ($\Delta t_{OFF}$).

**27.** The method according to claim 21, wherein the drainage device (18a; 18b-18f) is a timer-controlled drainage device including a local memory adapted to store a value of an actual standby time ($\Delta t_{OFF}$) between temporally mutually successive condensate discharges carried out by the drainage device (18a; 18b-18f), the method further comprising the steps of:

acquiring (56) atmospheric data ($P, T, U_r$) related to an environment in which the air treatment plant (1) is located,
estimating (58), on the basis of said atmospheric data, a flow rate of said condensate ($V_{ca}$),
calculating (58) a value of a theoretical standby time ($\Delta t_{OFF\_T}$) inversely proportional to the flow rate of said condensate, and
updating (58) the value of the actual standby time ($\Delta t_{OFF}$) with the value of the theoretical standby time ($\Delta t_{OFF\_T}$).

FIG. 1

EP 3 584 133 A1

ENABLE

$\Delta t_{OFF}$

"1"

"0"

$t_1$     $t_3$     $t_6$     t

$\Delta t_{ON}$

$\Delta t_{OFF}$

FIG. 2A

WATER

"1"

"0"

$t_1$     $t_2$     $t_4$     t

FIG. 2B

HOLD

"1"

"0"

$t_1$     $t_4$     $t_5$     t

$\Delta t_{HOLD}$

FIG. 2C

VALVE

"1"

"0"

$t_1$     $t_3$     $t_5$     t

$\Delta t_{DRAIN}$

FIG. 2D

EP 3 584 133 A1

START

32

UPDATE
CONFIGURATION

YES

NEW
CONFIGURATION? 30

NO

34 DISCHARGE CONDENSATE

36 SEND DIAGNOSTIC DATA

38 WAIT $\Delta t_{OFF}$

FIG. 3

START

40 RECEIVE DIAGNOSTIC DATA

42 SAVE DIAGNOSTIC DATA

44 SEND DIAGNOSTIC DATA

46 RECEIVE NEW CONFIGURATION

48 SEND NEW CONFIGURATION

FIG. 4

START

RECEIVE DIAGNOSTIC DATA — 50

SAVE DIAGNOSTIC DATA — 52

DETECT FAULTS — 54

RECEIVE ATMOSPHERIC DATA ⌐56

COMPUTE NEW CONFIGURATION — 58

NO ◇ NEW CONFIGURATION DIFFERENT FROM CURRENT CONFIGURATION? — 60

YES

SEND NEW CONFIGURATION — 62

FIG. 5

Europäisches
Patentamt

European
Patent Office

Office européen
des brevets

# EUROPEAN SEARCH REPORT

Application Number

EP 19 18 1547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/187890 A1 (BORKOWSKI MICHAEL R [US] ET AL) 30 June 2016 (2016-06-30) * paragraphs [0014] - [0044]; figure 2 * ----- | 1-27 | INV. B60T17/00 B01D53/26 F16T1/48 |
| X | JP 2003 343794 A (AIR LIQUIDE JAPAN LTD) 3 December 2003 (2003-12-03) * paragraphs [0012] - [0030]; figures 1-3, 4-6 * ----- | 1-27 | |
| X | JP 2009 056394 A (ORION MACHINERY CO LTD) 19 March 2009 (2009-03-19) * paragraphs [0028] - [0042], [0060] - [0083]; figures 1, 4-7 * ----- | 1,13, 17-19,21 | |
| X | JP 2009 133451 A (CHUGOKU ELECTRIC POWER) 18 June 2009 (2009-06-18) * paragraphs [0012] - [0047]; figure 1 * ----- | 1,13, 17-19,21 | |
| A | WO 2017/052607 A1 (NEW YORK AIR BRAKE LLC [US]) 30 March 2017 (2017-03-30) * paragraphs [0003], [0004], [0011] - [0013]; figures 1-4 * ----- | 1-27 | TECHNICAL FIELDS SEARCHED (IPC) B60T B01D F16T F22G G05B |
| A | JP 2 880478 B2 (CKD CORP) 12 April 1999 (1999-04-12) * paragraphs [0025] - [0032] * ----- | 1-27 | |

The present search report has been drawn up for all claims

| Place of search | Date of completion of the search | Examiner |
|---|---|---|
| The Hague | 18 November 2019 | Focante, Francesca |

EPO FORM 1503 03.82 (P04C01)

## ANNEX TO THE EUROPEAN SEARCH REPORT
## ON EUROPEAN PATENT APPLICATION NO.

EP 19 18 1547

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2019

| Patent document cited in search report | | Publication date | Patent family member(s) | | Publication date |
|---|---|---|---|---|---|
| US 2016187890 | A1 | 30-06-2016 | NONE | | |
| JP 2003343794 | A | 03-12-2003 | NONE | | |
| JP 2009056394 | A | 19-03-2009 | JP 4825757 | B2 | 30-11-2011 |
| | | | JP 2009056394 | A | 19-03-2009 |
| JP 2009133451 | A | 18-06-2009 | NONE | | |
| WO 2017052607 | A1 | 30-03-2017 | AU 2015409599 | A1 | 12-04-2018 |
| | | | CA 2999837 | A1 | 30-03-2017 |
| | | | DE 112015006955 | T5 | 21-06-2018 |
| | | | WO 2017052607 | A1 | 30-03-2017 |
| JP 2880478 | B2 | 12-04-1999 | JP 2880478 | B2 | 12-04-1999 |
| | | | JP H10213393 | A | 11-08-1998 |

EPO FORM P0459

For more details about this annex : see Official Journal of the European Patent Office, No. 12/82

**EP 3 584 133 A1**

**Patent documents cited in the description**

- IT 102018000006517
- IT 102018000020122